# EUROPÄISCHE PATENTSCHRIFT

(11) **EP 2 688 981 B1**
(45) Veröffentlichungstag und Bekanntmachung des Hinweises auf die Patenterteilung: **09.09.2015**
(21) Anmeldenummer: 11712472.7
(22) Anmeldetag: 23.03.2011
(51) Int. Cl.: C09K 21/02

(54) **FLAMMSCHUTZ**
FLAME PROTECTION
RETARDATEUR DE FLAMME

(43) Veröffentlichungstag der Anmeldung: 29.01.2014
(73) Patentinhaber: Fluorchemie GmbH Frankfurt, 65296 Frankfurt (DE)
(72) Erfinder: ROCKTÄSCHEL, Christian, 01809 Dohna (DE); MÖBIUS, Heinzhorst, 01809 Dohna (DE)
(74) Vertreter: Schäfer, Matthias W.
(86) Internationale Anmeldenummer: PCT/EP2011/001454
(87) Internationale Veröffentlichungsnummer: WO 2012/126487

(56) Entgegenhaltungen:
- CN-A- 101 624 457
- DE-A1- 2 627 504
- FR-A- 978 108
- SUNIL K. SHARMA ET AL: FIRE TECHNOLOGY, Bd. 38, Nr. 1, 1. Januar 2002 (2002-01-01) , Seiten 57-70, XP55012990, ISSN: 0015-2684, DOI: 10.1023/A:1013428831840

## Beschreibung

### Gebiet der Erfindung

Die Erfindung betrifft das Gebiet der anorganischen Flammschutzmittel (AFM).

### Hintergrund der Erfindung

Flammschutzmittel sind Brandhemmer, die die Ausbreitung von Bränden einschränken, verlangsamen oder verhindern sollen.

Flammschutzmittel finden überall dort Verwendung, wo sich potentielle Zündquellen befinden, bzw. dort wo die Verwendung brennbarer Materialen ein Sicherheitsrisiko darstellt.

Steigende Anforderungen an die Sicherheit und die zunehmende Verwendung hochwertiger Kunststoffe anstelle von Metallen und Metalllegierungen, z. B. im Bauwesen, Flugzeug- und Automobilbau sowie bei Innenausstattungen, haben zu einem zunehmenden Bedarf an Flammschutzmitteln geführt.

Die Wirkungsweise von Flammschutzmitteln beruht auf unterschiedlichen Effekten:
- Unterbrechung der Radikalkettenreaktion der bei der Pyrolyse des Materials entstehenden Gase;
- Bildung einer Schutzschicht aus verkohltem Material (Intumeszenz), um den Zutritt von Sauerstoff und Wärme zu verhindern;
- Kühlung des Verbrennungsprozesses durch Auslösung einer endothermen Zersetzung, bzw. Verdampfung von gebundenem Wasser;
- Verdünnung der brennbaren Gase durch inerte, gasförmige Substanzen;
- Verflüssigung, d. h. Bildung einer Schmelze, die aus der Brandzone fließt und gleichzeitig die Oberfläche verringert.

Die meisten Flammschutzmittel lösen einen oder mehrere der erwähnten chemischphysikalischen Effekte aus:

Daher unterscheidet man die folgenden 4 Typen von Flammschutzmitteln:
- additive Flammschutzmittel - diese werden in die brennbaren Stoffe eingearbeitet;
- reaktive Flammschutzmittel - Substanzen, die durch Einpolymerisation in Kunststoffe selbst Bestandteil des Materials sind;
- inhärente Flammschutzmittel - das Material an sich ist flammwidrig;
- Coating - das Flammschutzmittel wird von außen als Beschichtung auf den brennbaren Stoff aufgetragen.

Wichtige reaktive und inhärente, aber auch additive Flammschutzmittel sind inzwischen aus toxikologischen Gründen, d. h. Bildung von toxischen Gasen beim Zersetzungsprozess, in die Kritik geraten und unterliegen derzeit einer strengen Risikobewertung, so dass anorganische Flammschutzmittel zunehmend an Bedeutung gewonnen haben:

Die Produktionsanteile weltweit können, zum Beispiel, dem Bericht des Danish EPA ("Brominated Flame Retardants. Substance Flow Analysis and Assessment of Alternatives" (1999)) entnommen werden. Demzufolge verteilen sich die Gruppierungen der Flammschutzmittel wie folgt:
50 % anorganische Flammschutzmittel (AFM), z. B. ATH (Al(OH)₃) und MDH (Mg(OH)₂),
25 % halogenierte Flammschutzmittel,
20 % Organo-phosphor Verbindungen,
5 % Stickstoff-basierte Flammschutzmittel.

Aluminiumhydroxid (ATH) wird mengenmäßig als wichtigster anorganischer Flammschutz eingesetzt. ATH wird im Bayer-Verfahren aus Bauxit gewonnen. Als Abfallprodukt entsteht dabei Rotschlamm (RS). Unter Rotschlamm (RS) wird daher im folgenden der beim Bayer-Verfahren entstandene Rückstand verstanden, der bei der Gewinnung von ATH aus Bauxit anfällt.

Rotschlamm (RS), der in gewisser Weise als Bauxit minus ATH dargestellt werden kann, ist eine äußerst heterogene Substanz (vgl. Tabelle 1), z. B. hinsichtlich seiner chemischen und mineralogischen Zusammensetzung, seiner endothermen Eigenschaften, seines pH-Wertes, etc. Die Ursache für die Heterogenität liegt einmal in der unterschiedlichen Zusammensetzung der eingesetzten Bauxite, vor allem aber darin, ob das Bayer-Verfahren mit Autoklavenaufschluss oder mit Rohraufschluss arbeitet. Beim Autoklavenverfahren wird der Aufschluss mit 30 bis 35 prozentiger Natronlauge bei Temperaturen von 170 - . 180° C durchgeführt, so dass sich ein Druck von 6 -bis 8 bar einstellt. Das Rohraufschlussverfahren wurde entwickelt, um die Reaktionszeit von 6 bis 8 Stunden durch Temperaturerhöhung auf 270° C auf weniger als 1 Stunde zu verkürzen. Bei dieser Temperatur stellt sich allerdings ein Wasserdampfdruck von 60 bar am Ende des Reaktors ein. Die höheren Temperaturen des Rohraufschlusses beeinflussen auch die Zusammensetzung des Rotschlamms. Beispielsweise wird im System Fe-O₂-H₂O im Rohraufschlussverfahren das Gleichgewicht fast vollständig zu Hämatit hin verschoben.

Die CN 101 624 457 A offenbart ein PE-Polymer, das als Flammschutzmittel eine Kombination aus Rotschlamm und Synergisten enthält. Bei dem Rotschlamm gemäß der CN 101 624 457 A kommt ein herkömmlicher Rotschlamm, wie er z.B. nach einem Bayer-Verfahren erhalten wird, zum Einsatz, der SiO2, CaO, Al2O3 und Fe2O3, also als Hauptbestandteile enthält. Der herkömmliche Rotschlamm wird gemäß der CN 101 624 457 A zerkleinert und bei 80-100°C getrocknet, wodurch der Rotschlamm keine chemische Änderung, abgesehen von ggf. einem Wasserverlust, erfährt.

Sunil K. Sherma et al. beschreibt in Fire Technology, Bd. 38, Nr. 1,1, Januar 2002, S. 57-70, Plastikmaterialien, die Rotschlamm enthalten, und untersucht deren Verhalten gegenüber Feuer. Bei dem Rotschlamm handelt es sich um herkömmlichen Rotschlamm, bestehend aus Oxiden.

Die DE 26 27 504 A1 offenbart eine feuerhemmende wässrige Zusammensetzung mit Wasserglasanteilen. Die Zusammensetzung kann feucht anfallenden Rotschlamm enthalten. Bei dem Rotschlamm handelt es sich um einen herkömmlichen Rotschlamm, bestehend aus Oxiden.

Die FR 978 108 A offenbart die Verwendung von Rotschlamm als ein Verstärkungsmittel bzw. Versteifungsmittel für Kautschuk. Bei dem Rotschlamm handelt es sich um ein herkömmliches Produkt nach dem Bayer-Verfahren, wobei von dem Rotschlamm grobe Teile, insbesondere solche mit einem Teilchendurchmesser von mehr als 50 µm, entfernt werden. Der Rotschlamm ist reich an Eisenoxiden und enthält auch Natrium-Aluminium-Silikate. Zur Entfernung des Natrons kann der Rotschlamm mit einer sauren Substanz neutralisiert werden. Um hierbei ggf. gelöste metallische Verbindungen wieder als Metalloxide auszufällen, kann anschließend eine Behandlung mit einer basischen Substanz erfolgen.

Aufgrund der Heterogenität des Rotschlammes (RS) konnte bis heute keine bedeutende wirtschaftliche Anwendung gefunden werden. Insofern wird Rotschlamm (RS) fast ausschließlich als Abfall auf Deponien entsorgt.

### Zusammenfassung der Erfindung

Die der Erfindung zugrunde liegende technische Aufgabe ist daher die Vermeidung der oben genannten Nachteile durch die Bereitstellung eines neuartigen, wirtschaftlich verwertbaren anorganischen Flammschutzmittels.

Diese Aufgabe wird durch die beigefügten unabhängigen Ansprüche gelöst. Vorteilhafte Weiterbildungen und Ausführungsformen der vorliegenden Erfindung werden in den abhängigen Ansprüchen definiert.

Die vorliegende Erfindung betrifft ein anorganisches, halogenfreies nicht toxisches Flammschutzmittel mit einer mineralischen Zusammensetzung von 10 - 50 Gewichtsprozent Eisenverbindungen, 12 - 35 Gewichtsprozent Aluminiumverbindungen, 5 -17 Gewichtsprozent SiO₂ 2 - 21 Gewichtsprozent TiO₂, 0,5 - 6 Gewichtsprozent CaO und 3 - 10 Gewichtsprozent Na₂O.

Dabei ist vorgesehen, dass im erfindungsgemäßen anorganischen Flammschutzmittel das Verhältnis von Hydroxiden/Oxidhydraten des Alumiuniums zu Oxiden des Aluminium größer gleich 1 ist (d. h. mind. 50 Gewichtsprozent, vorzugsweise 80 Gewichtsprozent Hydroxide/Oxidhydrate) und das Verhältnis von Oxidhydraten des Eisens zu Oxiden des Eisens gleich größer 1 ist (d. h. mind. 50 Gewichtsprozent, vorzugsweise 80 Gewichtsprozent Oxidhydrate). Ferner ist vorgesehen, dass das anorganische Flammschutzmittel modifizierter, rehydratisierter Rotschlamm (MR2S) ist.

Außerdem kann es vorteilhaft sein, dass im modifiziertem, rehydratisiertem Rotschlamm (MR2S) der Anteil an Na₂O löslich kleiner gleich 0,03 Gewichtsprozent beträgt, die mittlere Teilchengröße (d 50) kleiner gleich 50 µm, vorzugsweise 0,5 bis 10 µm beträgt und die Restfeuchte kleiner gleich 0,4 Gewichtsprozent beträgt. Dadurch wird eine wirtschaftlich sinnvolle Nutzung des Rotschlamms (RS) entwickelt, die u.a. das Problem der Entsorgung von Rotschlamm (RS) als teuerer Sondermüll verringert.

Ferner offenbart die vorliegende Erfindung ein brandgeschütztes Stoffsystem umfassend eine brennbares Material das erfindungsgemäßen flammhemmenden Mittel und ein Verfahren zu Herstellung von brandgeschützten Stoffsystemen, welches die Schritte: Bereitstellen eines brennbaren Materials, Vermengen oder Beschichten des brennbaren Materials mit dem erfindungsgemäßen flammhemmenden Mittel und dadurch Erhalten eines brandgeschützten Stoffsystems aufweist.

Somit wird sogenannter modifizierte, rehydratisierte Rotschlamm (MR2S) bereitgestellt, der sich als hervorragendes anorganische Flammschutzmittel erweist. Überraschenderweise wurde außerdem festgestellt, dass der so bereitgestellte modifizierte, rehydratisierte Rotschlamm (MR2S), wenn er in brennbare Substanzen, z. B. Polymere, als AFM eingearbeitet wird, im Brandfall eine Verglasung bzw. eine Versinterung der Asche bewirkt. Mit einer Verglasung bzw. einer Versinterung wird verstanden, dass die brennbaren Substanzen in der der erfindungsgemäßen AFM eingearbeitet wurde im Brandfall weder flüssig werden noch danach als Flugasche vorliegen. Im Gegenteil wird ein Zustand der Asche erreicht, der noch gewisse mechanischen Eigenschaften, insbesondere eine besondere Stabilität, besitzt. Dies ist insofern besonders vorteilhaft als dadurch beispielsweise die Ausbildung von Flugasche vermieden wird, die eingeatmet werden könnte. Dies ist weiterhin besonders vorteilhaft als dadurch ebenfalls keine Verflüssigung der brennbaren Systeme stattfindet, wodurch eine Erweiterung des Brandes vermindert wird. Weiterhin ist besonders vorteilhaft, dass dadurch die Zufuhr von Sauerstoff im Kern der brennbaren Systeme verringert wird, so dass eine weitere oder durchgehende Verbrennung verhindert wird. Besonders vorteilhaft wirkt sich die Verglasung der Asche beispielsweise auf die Isolierungen von Kabeln aus, die dadurch sogar ihre Funktionalität auch im Brandfall behalten.

Wird Rotschlamm (RS) Modifikationen unterzogen, erweist er sich als ausgezeichnetes halogenfreies anorganisches Flammschutzmittel. Unter Modifikation kann beispielsweise folgendes verstanden werden:
- Bereitstellen von Rotschlamm (RS),
- Analyse der Bestandteile des bereitgestellten Rotschlamms (RS)
- Rehydratisierung des Rotschlamms,
- Physikalische Bearbeitung des rehydratisierten Rotschlamms.

Weitere Modifikationen können beispielsweise folgendes sein:
- Waschen des bereitgestellten Rotschlamms (RS), beispielsweise mit Wasser,
- Waschen des rehydratisierten Rotschlamms, beispielsweise mit Wasser,
- Trocknen des rehydratisierten Rotschlamms,
- Physikalische Bearbeitung des rehydratisierten Rotschlamms, um vorteilhafterweise eine gewünschte Kornverteilung zu erhalten, beispielsweise durch mahlen und sieben.
- Compoundieren des getrockneten und physikalisch bearbeiteten, rehydratisierten Rotschlamms beispielsweise mit einer Kunststoffmatrix.
- Zumischung von endotherm reagierenden Substanzen wie ATH (Gibbsit, Boehmit), Magnesiumhydroxid (MDH) oder Goethit, etc., um die thermischen Eigenschaften zu optimieren und ggf den Temperaturbereich, in dem das anorganische Flammschutzmittel (AFM) reagiert, zu erweitern.

Bei der Rehydratisierung werden oxidische Substanzen von z.B. A1 oder Fe in hydroxidische Substanzen verwandelt: Boehmit (Al-Oxidhydrat) wird in Gibbsit (Al(OH)₃), Al₂O₃ in Gibbsit, Hämatit (Eisenoxid) in Goethit (Eisenoxidhydrat) verwandelt. Es entstehen also aus Substanzen, die im gewünschten Wirkungsbereich von 180 bis 350°C keine oder nur eine geringe Wirkung zeigen, Substanzen mit höchstmöglichem endothermen Potential. Durch diesen Prozess, der die chemische und mineralogische Zusammensetzung von Rotschlamm (RS) verändert, werden die endotherme Enthalpie und damit die flammhemmende Wirkung so gesteigert, dass ein in seiner Wirkung klar definiertes anorganische Flammschutzmittel (AFM) entsteht, unabhängig davon, ob der RS aus einem Autoklavenaufschluss oder einem Rohraufschluss stammt.

Der so hergestellte modifizierte, rehydratisierte Rotschlamm (MR2S) kann für seine Anwendung als anorganisches Flammschutzmittel (AFM) in den jeweiligen Stoffsystemen mit definierten Eigenschaften bereitgestellt werden. Je höher die endotherme Enthalpie nach der Rehydratiserung ist, umso geringer muss der Füllgrad im Stoffsystem sein.

Da die endotherme Reaktion von modifiziertem, rehydratisiertem Rotschlamm (MR2S) ein Temperaturintervall von ca. 180° C bis 350° C abdeckt, kann der Einsatz von ATH und/oder MDH teilweise oder ganz durch modifizierten, rehydratisierten Rotschlamm (MR2S) ersetzt werden, d. h. mit einer einzigen Substanz.

Modifizierter, rehydratisierter Rotschlamm (MR2S) kann hinsichtlich seiner Oberflächen modifiziert werden, insbesondere um die Einarbeitung in die Stoffsysteme zu erleichtern.

Insbesondere kann modifizierter, rehydratisierter Rotschlamm (MR2S) mit Nanoclays beschichtet werden. Dadurch entsteht im Brandfall eine weitere verbesserte Verglasung der Asche. Die im modifizierten, rehydratisierten Rotschlamm (MR2S) enthaltenen clayartigen Verbindungen erzeugen auch allein eine Verglasung der Asche.

Insbesondere feinteiliger modifizierte, rehydratisierte Rotschlamm (MR2S) neigt bei hohen Temperaturen zum Sintern, wodurch die beschriebenen glasigen Aschen entstehen.

Zusammenfassend deckt modifizierter, rehydratisierter Rotschlamm (MR2S) die Anwendungsgebiete von ATH und MDH ab und geht in seiner Brandschutzwirkung darüber hinaus. Durch Beschichtung mit Nanoclays wird auch das Problem der Asche durch eine verbesserte Verglasung gelöst. Da Rotschlamm (RS) als Ausgangsrohstoff für modifizierten, rehydratisierten Rotschlamm (MR2S) in großen Mengen zur Verfügung steht, ist es möglich, insbesondere alle Massenprodukte als volkswirtschaftliche Werte preisgünstig mit anorganischen Flammschutzmitteln (AFM) auszustatten.

Für die Einarbeitung des anorganischen Flammschutzmittels (AFM) in brennbare Substanzen, z. B. Polymere, muss der Anteil an wasserlöslichem Soda (ausgedrückt als Gewichtsprozent Na₂O) soweit wie möglich abgesenkt werden, um die Wasserbeständigkeit der Polymere zu erhöhen. Das gilt insbesondere natürlich für die Isolierungen von Kabeln.

Offenbart wird ein brandgeschütztes Stoffsystem umfassend ein brennbares Material und ein flammhemmende Mittel (im Folgenden Flammschutzmittel oder Flammhemmer) dadurch gekennzeichnet, dass das flammhemmende Mittel eine mineralische Zusammensetzung umfasst, die
10-50 Gewichtsprozent Eisenverbindungen
12-35 Gewichtsprozent Aluminiumverbindungen
5 - 17 Gewichtsprozent SiO₂
2 - 10 Gewichtsprozent TiO₂,
0,5 - 6 Gewichtsprozent CaO und
3 - 10 Gewichtsprozent Na₂O
umfasst.

Die mineralische Zusammensetzung kann insbesondere modifizierter, rehydratisierter Rotschlamm (MR2S) sein. Entscheidend ist, dass die Verbindungen des Eisens und des Aluminiums überwiegend als Hydroxide oder Oxidhydrate und nicht als Oxide vorliegen. Durch den Prozess der Rehydratisierung werden alle Verbindungen des Aluminiums und des Eisens überwiegend in Hydroxide oder Oxidhydrate verwandelt. Beim Aluminium werden Gamma Al₂O₃ und Boehmit in Gibbsit verwandelt, bei Eisen Hämatit in Goethit. Dadurch wird die höchstmögliche Stufe der endothermen Enthalpie erreicht und damit die höchstmögliche Flammhemmung.

Das Stoffsystem kann ein Baustoff, ein Kunststoffprodukt, ein Gummiprodukt, eine Spanplatte, oder eine Kabelisolierung oder -Ummantelung aus einem oder mehreren Polymeren sein.

Das Stoffsystem kann den Flammhemmer in einem Anteil von 3 - 95 Gewichtsprozent umfassen.

Das flammhemmende Mittel kann die mineralische Zusammensetzung (MR2S) in einem Anteil von 30-100 Gewichtsprozent umfassen und der jeweils verbleibende Anteil von 0-70 Gewichtsprozent kann durch eine weitere flammhemmende Zusammensetzung oder flammhemmenden Zusatz gebildet werden.

Die weitere flammhemmende Zusammensetzung oder flammhemmender Zusatz kann eine anorganische nichttoxische endotherm reagierende Substanz umfassen.

Die weitere flammhemmende Zusammensetzung oder flammhemmender Zusatz kann insbesondere Salzhydrate, Hydroxide und Karbonate umfassen.

Der Gehalt an Na₂O löslich wird auf < 0,03 Gewichtsprozent, bzw. 0,003 Gewichtsprozent, bzw. 0,003 - 0,03 Gewichtsprozent eingestellt.

Offenbart wird auch die Verwendung des oben beschriebenen flammhemmende Mittels als Flammhemmer für brennbarere Stoffsysteme, brennbare Baustoffe, Kunststoff, Gummi, Spanplattenmaterial, oder Kabelummantelungen.

Offenbart wird auch ein Verfahren zu Herstellung von brandgeschützten Stoffsystemen, umfassend die Schritte:
a. Bereitstellen eines brennbaren Materials,
b. Vermengen oder Beschichten des brennbaren Materials mit dem flammhemmende Mittel, und dadurch
c. Erhalten eines brandgeschützten Stoffsystems.

Die mineralische Zusammensetzung in dem in Schritt b. genannten flammhemmenden Mittel kann feinkörnig sein und kann vorzugsweise eine mittlere Teilchengröße (d50) von 0,5 - 50 µm aufweisen, vorzugsweise 0,5 -10 µm.

Das flammhemmende Mittel kann vor dem Vermengen oder Beschichten des Schrittes b physikalisch behandelt werden, insbesondere gemahlen werden.

Das flammhemmende Mittel kann einer Oberflächenbehandlung unterzogen werden, insbesondere einer Beschichtung mit Substanzen, die die Verträglichkeit des flammhemmenden Mittels mit einer Polymermatrix verbessern oder die eine verbesserte Verglasung der Asche bewirken, welche im Brandfalle die Diffusion der brandfördernden (Pyrolyse-) Gase zur Flammenfront verhindert, bzw. die Oberfläche isoliert und im Falle der Kabelsysteme den Funktionserhalt unter Brandbedingungen möglichst lange gewährleistet.

Zur Beschichtung der Oberfläche des flammhemmenden Mittels können insbesondere Silane, Fettsäuren und Weichmacher sowie bekannte Verfahren Verwendung finden. Für die Verbesserung der Verglasung der Asche werden insbesondere Nanoclays, Borsäure und deren Metallderivate sowie Zinkstannat und /oder Zinkhydroxystannat sowie Kombinationen vorgenannter Verbindungen eingesetzt. Dadurch wird auch ein mögliches Nachglimmen verhindert.

### Eingehend Beschreibung der Erfindung

### Definitionen

Unter dem Begriff "brandgeschütztes Stoffsystem" wird eine Vorrichtung verstanden, bei der ein brennbares Material mit einem flammhemmenden Mittel in Verbindung gebracht wird, so dass das Entzünden des in der Vorrichtung vorhandenen brennbaren Materials durch Feuer oder Hitze verhindert oder verlangsamt wird. Insbesondere ist das flammhemmende Mittel mit dem brennbaren Material fest verbunden, beispielsweise durch Vermengen oder Beschichten.

Unter "flammhemmenden Mittel" im Sinne der Erfindung werden Flammschutzmittel, insbesondere nicht toxische, halogenfreie anorganische Flammschutzmittel verstanden, insbesondere modifizierter, rehydratisierter Rotschlamm (MR2S).

Unter brennbaren Materialien oder entflammbaren Materialien werden jegliche Materialien verstanden, die brennbar oder entflammbar sind, insbesondere Polymere und nicht flüchtige Kohlenwasserstoffe. Beispiele sind Acryl Dispersionen, Acrylharze, Elastomere, Epoxidharze, Latex Dispersionen, Melaminharze, Polyamid (PA), Polyethylen (PE), PE-Copolymere, PE-Copolymere thermoplastisch, PE-Copolymere vernetzt, Phenolharze, Polyesterharze (UP), Polyurethan, Polypropylen (PP), Polyvinylchlorid (PVC), PVC Plastisole, thermoplastische Elastomere auf Urethanbasis (TPU), Vinylesterharze, Bitumen und andere. Brennbar und entflammbar sind hier als Synonyme zu verstehen.

Unter Rotschlamm (RS) wird der beim Bayer-Verfahren entstehende Rückstand verstanden, der bei der Gewinnung von ATH aus Bauxit anfällt. Unter modifiziertem, rehydratisiertem Rotschlamm (MR2S) wird ein Produkt verstanden, das aus Rotschlamm (RS) durch Rehydratisierung, Trocknen, Mahlen, Zumischen anderer Substanzen, Beschichtung der Oberfläche, etc. hergestellt wird. Modifizierter, rehydratisierter Rotschlamm (MR2S) hat eine Feuchte von höchstens 0,4 Gewichtsprozent, einen Gehalt an Na₂O löslich von < 0,03 Gewichtsprozent und eine Korngröße (d 50) von 0,5 -50 µm, vorzugsweise von 0,5 bis 10 µm.

### Gegenstand der Erfindung

In der vorliegenden Erfindung wird sog. modifizierter, rehydratisierter Rotschlamm (MR2S) als anorganisches Flammschutzmittel (AFM) eingesetzt.

Rotschlamm entsteht bei der Tonerdeherstellung nach dem Bayer-Verfahren. Im Bayer-Verfahren wird geeigneter Bauxit getrocknet und gemahlen, im berechneten Verhältnis mit wässriger, konzentrierter Natronlauge gemischt und im Autoklavenverfahren oder im Rohraufschlussverfahren bei erhöhten Temperaturen und Drücken aufgeschlossen. Die entstehende Na-aluminat-Lauge wird abgetrennt. Daraus wird nach Verdünnen durch Ausrühren mit frisch gefälltem ATH als Kristallkeim das ATH ausgefällt. Aus Aluminiumhydroxid (ATH) wird Tonerde, Al₂O₃ und daraus Aluminium-Metall hergestellt.

Der im Autoklavenverfahren, bzw. im Rohraufschlussverfahren nicht gelöste Rückstand wird abgetrennt, gewaschen, eingedickt und als "Rotschlamm" auf Deponien abgelagert. Der Name Rotschlamm kommt von seiner roten Farbe aufgrund eines hohen Eisengehalts.

Bei jeder produzierten Tonne Aluminium fallen je nach Qualität des verwendeten Bauxits 1-2 Tonnen Rotschlamm mit einem Wassergehalt von ca. 50 % als nicht vermeidbares Koppelprodukt an. Pro Jahr entstehen viele Millionen Tonnen, die zusammen mit den bereits auf Deponien lagernden Mengen ein ernsthaftes Problem darstellen. Da es bislang nicht gelungen ist, Rotschlamm in relevantem Umfang einer wirtschaftlich sinnvollen Verwendung zuzuführen, wird er weiterhin als Abfall betrachtet und der Entsorgung zugeführt. Die Entsorgung des Rotschlamms erfolgt dabei im Wesentlichen durch Einlagerung in abgedichteten Deponien. Diese Form der Lagerung ist teuer und aufwendig, da große Deponieflächen benötigt werden und hohe Kosten für Transport des Rotschlammes anfallen. Zudem stellen die durch die Deponierung entstehenden Langzeitkosten, vor allem für die Überwachung der Deponien, ein wirtschaftliches Problem dar. Die Entwicklung einer wirtschaftlich sinnvollen Nutzung des Rotschlammes ist daher dringend erforderlich.

Die Zusammensetzung von getrocknetem Rotschlamm wird wesentlich durch die Zusammensetzung des eingesetzten Bauxits bestimmt. Großen Einfluss hat auch die Durchführung der Drucklaugung mit NaOH im Bayer-Prozess im Autoklaven-, bzw. Rohraufschlussprozess. In Tabelle 1 sind in Gewichtsprozent eine typische Zusammensetzung und durchschnittliche Bandbreiten aufgegeben. Da in früheren Zeiten der Bayer-Prozess weniger effektiv durchgeführt wurde, sind in Deponien auch Rotschlämme zu finden, die in ihrer Zusammensetzung davon abweichen.

**Tabelle 1**

| Zusammensetzung von Rotschlämmen | | |
|---|---|---|
| **Inhaltsstoff** | **Typ. Zusammensetzung %** | **Bandbreite (%)** |
| Fe₂O₃ | 40 | 10-50 |
| Al₂O₃ | 25 | 10-30 |
| SiO₂ | 15 | 3-25 |
| TiO₂ | 7 | 2-24 |
| CaO | 1 | 0,5-10 |
| Na₂O | 9 | 2-20 |
| sonstige | 3 | 0-3 |

Rotschlamm (RS) bildet mineralogisch eine Mischung aus unterschiedlichen Mineralien und Oxiden, die, wie schon erwähnt, wesentlich durch die Zusammensetzung des eingesetzten Bauxits und das Auslaugeverfahren bestimmt wird. RS enthält z. B. Gibbsit, Boehmit, gamma Al203, Goethit, Hämatit, Rutil, Anastas, Quarz, Kaolinit, Hydroxylsodralit, Calcit und andere Substanzen.

Messungen der Kornverteilung zeigen, dass RS als sehr feines Pulver anfällt.

Weitere Untersuchungen wie z. B. mit Hilfe der Differenzialthermoanalyse (DTA) zeigen, dass Rotschlamm (RS) endotherme Reaktionen aufweist. Die Ursache liegt darin, dass im Rotschlamm (RS) noch Restgehalte an Hydroxiden, bzw. Oxidhydraten des Aluminiums (Gibbsit und Boehmit) sowie des Eisens (Goethit) enthalten sind, die endotherm reagieren und Wasser abspalten. Allerdings schwankt das endotherme Verhalten von sehr schwach bis deutlich bemerkbar. Sowohl frisch hergestellter RS wie auf Deponien abgelagerter RS zeigen dieses Verhalten. Breite analytische Untersuchungen erklären dieses Phänomen: nur die Restgehalte an Hydroxiden und Oxid-Hydraten im RS wie Z. B. Gibbsit, Boehmit oder Goethit zeigen das beschriebene endotherme Verhalten einschließlich Wasserabspaltung im Temperaturbereich von ca. 180° C - 350° C. Diese Restgehalte hängen entscheidend von den verwendeten Bauxiten, vor allem aber vom Aufschlussverfahren und den dabei zur Anwendung kommenden Temperaturen und Drücken ab. Je höher die Temperaturen beim Aufschluss sind, desto mehr verschiebt sich bei den Al- und Fe-Verbindungen das Gleichgewicht von den Hydroxiden, über die Oxid-Hydrate hin zu den reinen Oxiden, die keine endotherme Reaktion mehr im bevorzugten Temperaturbereich von 180 bis 350°C aufweisen. Daher ergehen sich große Schwankungen im endothermen Verhalten und der gewünschten Wasserabspaltung. Rotschlamm (RS) so wie er bei der Herstellung anfällt kann also nicht als definiertes AFM eingesetzt werden.

Erfindungsgemäß wird Rotschlamm (RS) modifiziert, insbesondere rehydratisiert, um sein endothermes Verhalten und die Wasserabspaltung deutlich zu stärken und damit die Chance zu eröffnen, einen hochwirksamen, reproduzierbaren und in gewisser Weise genormten anorganischen Flammhemmer herzustellen. Der Weg führt beim Aluminium über die Umwandlung von Aluminiumoxid und Aluminiumoxidhydraten zu Aluminiumhydroxiden, d. h. aus Gamma Al203 wird ATH (Gibbsit) und das Aluminiumoxidhydrat (Boehmit) wird ATH (Gibbsit). Beim Eisen wird Eisenoxid (Hämatit) in Eisenoxidhydrat (Goethit) verwandelt. Nach Rehydratisierung liegen also alle Verbindungen des Aluminiums und des Eisens überwiegend als Hydroxide/Oxidhydrate vor, so dass das dann als modifizierter, rehydratisierter Rotschlamm (MR2S) vorliegende Produkt sein maximal mögliches Potential als AFM voll entfalten kann, weil eben nur Hydroxide und Oxidhydrate die endotherme Reaktion und Wasserabspaltung zeigen.

Modifizierter und rehydratisierter Rotschlamm (MR2S) ist hinsichtlich seiner chemischen und mineralogischen Zusammensetzung im Vergleich zum Rotschlamm (RS), der als Abfallprodukt beim Bayerprozess anfällt, ein völlig anderes, durch chemische Reaktion aus Rotschlamm (RS) hergestelltes Produkt. Im modifizierten, rehydratisierten Rotschlamm (MR2S) sind überwiegend Hydroxide und Oxidhydrate enthalten. Durch die Modifizierungen, wie sie beschrieben wurden, können erstmalig marktfähige Produkte für den nicht toxischen, halogenfreien, anorganischen Flammschutz hergestellt werden.

### Herstellung von MR2S

Die Herstellung von modifiziertem, rehydratisiertem Rotschlamm (MR2S) erfolgt grundsätzlich durch Behandlung des Rotschlamms (RS) mit anorganischen Mineralsäuren, insbesondere mit Schwefelsäure oder mit Salzsäure.

So kann beispielsweise Rotschlamm (RS) mit konzentrierter (z.B. 96%- oder 70%iger) Schwefelsäure vermischt werden. Durch Zugabe von Wasser lassen sich hinsichtlich Löseverhalten unter Bezug auf die jeweils vorliegenden Rotschlämme optimale Temperaturen und Säurekonzentration einstellen. Dabei lösen sich weitgehend Alhydroxide wie Gibbsit, Aluminiumoxidhydrate wie Böhmit und Gamma Al203, aber auch Eisenoxidhydrate wie Goethit und Eisenoxide wie Hämatit zu Sulfaten des Aluminiums und Eisens.

Durch die Rehydratisierung lassen sich Al- und Fe-Salz als Hydroxide, bzw. Oxidhydrate zurückgewinnen. Durch die damit erreichte Umwandlung der Oxide und Oxidhydrate in Hydroxide/Oxidhydrate, wird die endotherme Enthalpie unter Bezugnahme auf die chemische Zusammensetzung des als Ausgangsrohstoff benutzten Rotschlamms (RS) gesteigert. Das Verhältnis von Hydroxiden/Oxidhydraten zu Oxiden liegt nach der Rehydratisierung weitgehend auf der Seite der Hydroxide/Oxidhydrate.

Nach Behandlung des Rotschlamms RS mit Säuren kann das saure Filtrat vom unlöslichen Rückstand getrennt werden und die Ausfällung der Hydroxide, bzw. Oxidhydrate isoliert vom unlöslichen Filterrückstand erfolgen.

Die Rehydratisierung erfolgt also dadurch, dass der normalerweise alkalische Rotschlamm (RS) ins saure Milieu überführt wird und nach Lösen der Oxide und Hydroxide/Oxidhydrate wieder realkalisiert wird. Dabei werden die Metallsalze, insbesondere Metallsulfate als Hydroxide oder Oxidhydrate ausgefällt.Der Gehalt an Oxiden wird dadurch stark verringert oder komplett in Hydroxide/Oxidhydrate überführt.

Während bei den üblichen anorganische Flammhemmern wie ATH die Herstellung nur im alkalischen Bereich erfolgt und z. B. der Gehalt an löslichem Na₂O und der pH-Wert durch Waschen optimiert werden müssen, können bei der Herstellung von modifiziertem, rehydratisiertem Rotschlamm (MR2S), durch den Wechsel des Milieus von alkalisch nach sauer und dann neutral bis alkalisch, Produkte gewonnen werden, die hinsichtlich thermischem Verhaltens, aber auch hinsichtlich chemischer Eigenschaften wie z. B. Gehalt an Na₂O löslich, etc. optimiert und auf die jeweilige Anwendung maßgeschneidert werden können. So kann z. B. durch "Titration" von sauer nach alkalisch ein Gehalt von Na₂O löslich von kleiner 0,003 Gewichtsprozent eingestellt werden.

Die allgemeine Beschreibung des Herstellungsprozesses von modifiziertem rehydratisiertem Rotschlamm (MR2S) zeigt, dass mit modifiziertem, rehydratisiertem Rotschlamm (MR2S) durch Modifizierung, insbesondere Rehydratisierung von Rotschlamm (RS) ein in seiner Zusammensetzung im Vergleich zum Ausgangsrotschlamm unterschiedlicher neuer Stoff gewonnen werden kann, der hinsichtlich chemischer und mineralogischer Zusammensetzung, hinsichtlich seines thermischen Verhaltens und seines physikalischen Verhaltens neu ist und für seine jeweilige Anwendung und die dafür notwendigen Eigenschaften spezifisch und reproduzierbar eingestellt werden kann.

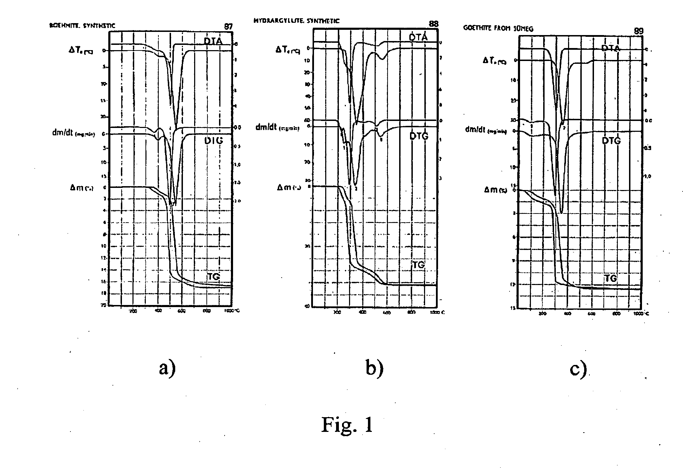

Im Rotschlamm (RS) sind vor allem die Hydroxide/Oxidhydrate des Aluminiums (Gibbsit und Boehmit) sowie des Eisens (Goethit) für die endotherme Reaktion verantwortlich. In der Figur 1 sind die thermoanalytischen Kurven (DTA) von Boehmit (Figur 1a), Hydrargyllit (Gibbsit) (Figur 1b) und Goethit (Figur 1c) (aus G. Liptay, Atlas of thermoanalytical curves, Heyden & Son Ltd., London 1973) dargestellt.

Je nach Restgehalt an Hydroxiden/Oxidhydraten und Oxiden des Aluminiums und des Eisens im beim Bayer-Prozeß anfallenden Rotschlamms (RS) lassen sich nach Rehydratisierung alle Salze des Aluminiums und Eisens nahezu vollständig als Hydroxide/Oxidhydrate gewinnen. Die chemische Analyse des Rotschlamms (RS) gibt vor, wie hoch der Gehalt an Hydroxiden/Oxidhydraten nach der Rehydratisierung max. sein kann. Damit ist auch die endotherme Wirkung definiert.

Höhere endotherme Wirkungen, die über die Möglichkeiten der Rehydratisierung der im RS vorhandenen Hydroxide/Oxidhydrate und Oxide hinausgehen, können nur durch Zusatz von Hydroxiden/Oxidhydraten z. B. des Aluminiums, Eisens oder Magnesiums erfolgen.

### Beispiel 1 + 2

Ca. 50 g einer Rotschlamm-Probe aus einem Autoklaven- und einem Rohraufschlussverfahren werden mit 200 ml einer 70%igen H2S04 aufgeschlämmt und anschließend 1 h gerührt. Zur Beschleunigung des Lösevorgangs erfolgt die Zugabe von je 600 ml destilliertem Wasser zu den beiden Aufschlämmungen. Neben der dabei auftretenden Wärmetönung werden die Suspensionen noch zusätzlich auf der Heizplatte auf ca. 80 - 90° C erhitzt. Der Lösevorgang ist beendet, nachdem die Rotfärbung der Suspension verschwunden ist und der ungelöste Rückstand sich grau gefärbt hat. Nach, dem Abtrennen des Rückstandes mittels Vakuumfiltration wird dieser mit wenig Wasser gewaschen und anschließend bei 105° C im Trockenschrank getrocknet.

Die beiden sauren Filtrate aus dem Rotschlamm (RS) eines Autoklaven- und eines Rohraufschlusses werden durch vorsichtige Zugabe von NaOH-Lauge neutralisiert. Durch weitere Zugabe von NaOH werden dann im alkalischen Bereich (pH-Werte 10-11) die gelösten Salze des Eisens und Aluminiums als Hydroxide, bzw. Oxidhydrate ausgefällt. Aufgrund des hohen Eisen-Anteils sind die Niederschläge rotbraun gefärbt. Die Suspension wird anschließend abfiltriert und der Filterrückstand mit heißem, destilliertem Wasser gewaschen, um zumindest teilweise Natriumsulfat und Natronlauge aus dem Filterrückstand heraus zu waschen. Der Filterrückstand wird dann bei 105° C im Filterschrank getrocknet.

Die beiden resultierenden Proben aus dem Autoklaven- und Rohraufschlussverfahren sind dann röntgenographisch und thermoanalytisch untersucht worden.

### Röntgenographische Ergebnisse

Aufgrund der schnellen Fällung ohne Zustaz von Kristallkeimen sind die Hydroxide und Oxidhydrate überwiegend amorph angefallen. Hinsichtlich der mineralogischen Zusammensetzung konnten halbquantitativ folgende Gehalte für Verbindungen des Eisens und Aluminiums ermittelt werden (siehe Tabelle 2)

**Tabelle 2**

| Röntgenographische Ergebnisse | | |
|---|---|---|
| **Bestandteil** | **Ausgangsstoff RS aus Autoklavenaufschluss** | **Ausgangsstoff RS aus Rohraufschluss** |
| Rotschlamm original | Hämatit | Hämatit |
| | Gibbsit | Gibbsit |
| | Böhmit | Böhmit |
| Ungelöste Anteile (Filterrückstand) | **Keine** | **Keine** |
| | Hydroxide/Oxidhydrate oder Oxide des Al oder Fe | Hydroxide/Oxidhydrate oder Oxide des Al oder Fe |
| Alkalische Ausfällung aus dem Filtrat nach Abtrennung von den ungelösten Anteile | (pH 10,0) | |
| | Goethit (amorph) | (pH 11,1) |
| | Böhmit (amorph) | Goethit (amorph) |
| | Gibbsit (amorph) | |

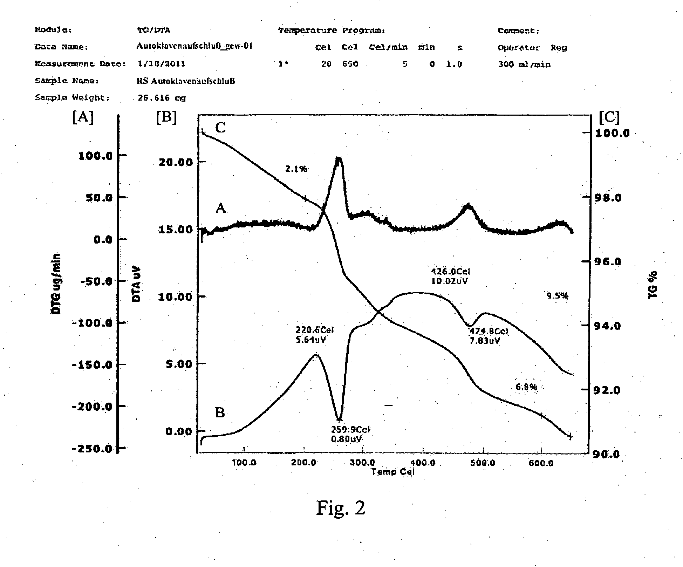

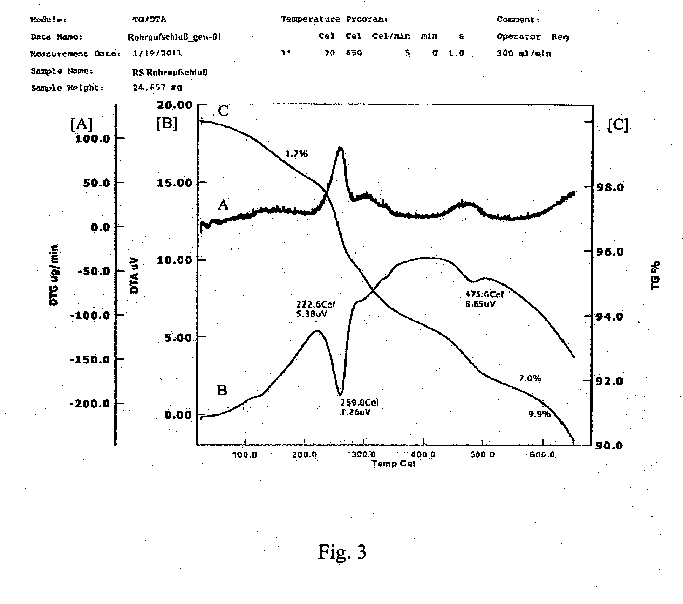

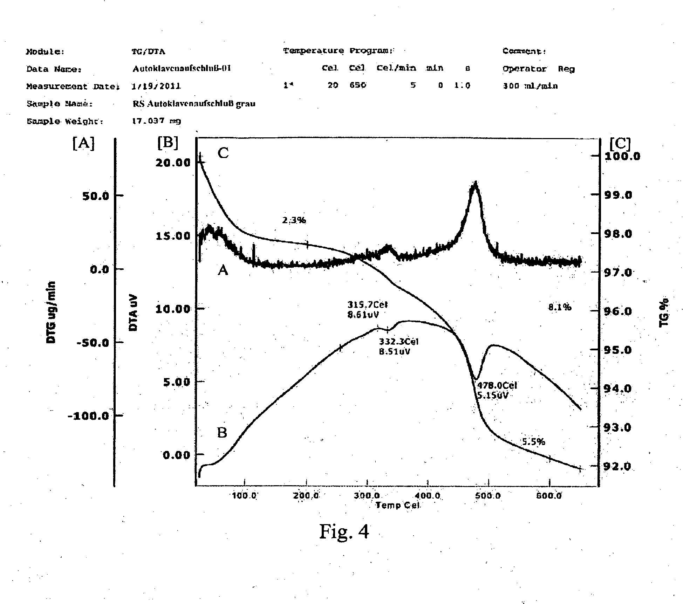

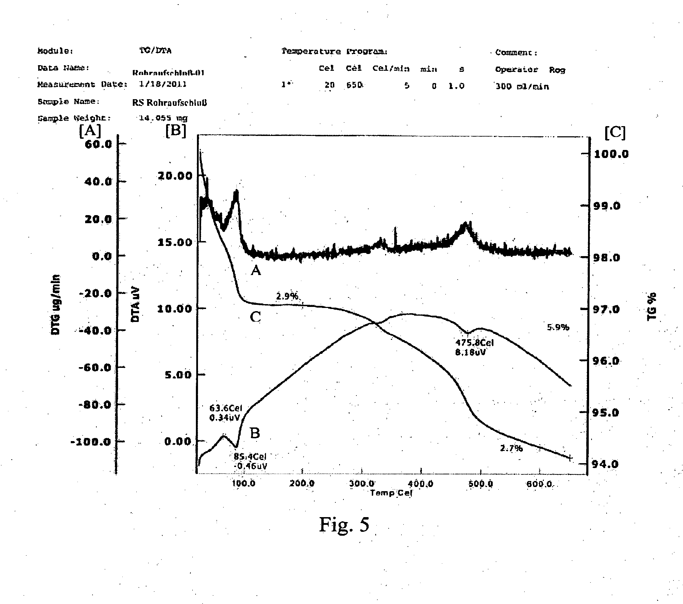

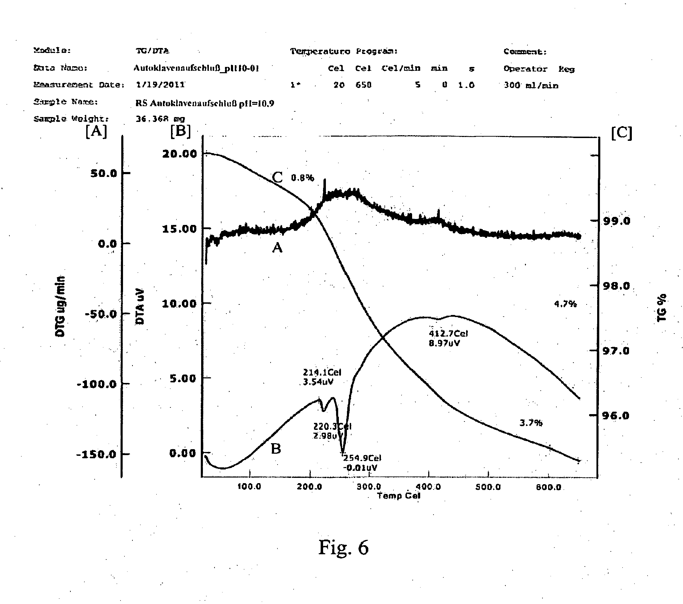

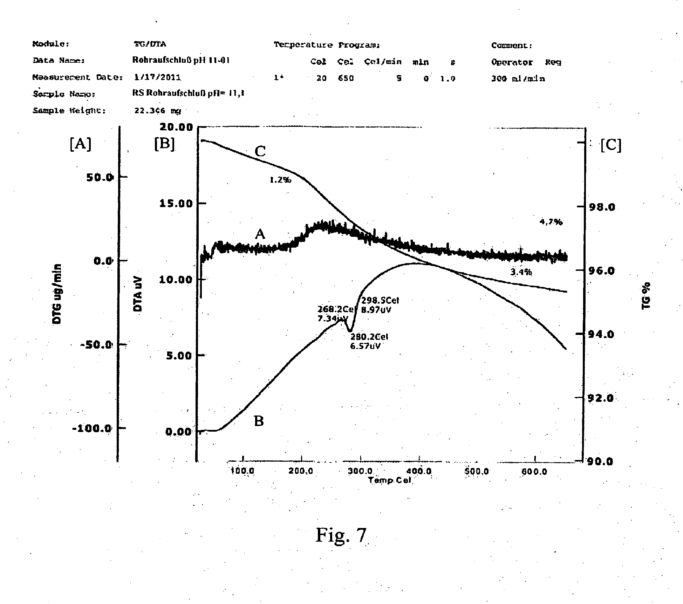

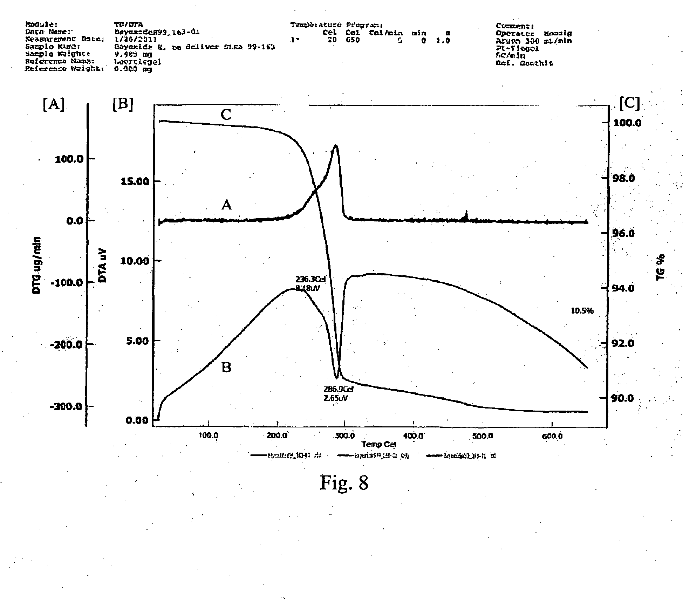

Die Abbildungen 2-8 zeigen die Umwandlung von Oxiden zu Hydroxiden oder Oxidhydraten, bzw. Oxidhydraten zu Hydroxiden beim Aluminium. Dargestellt sind DTA-(Differentialthermoanalyse), TG- (Thermogravimetrie) und DTG-(Differentialthermogravimetrie) Messungen.

### Figuren

Figur 1 zeigt thermoanalytische Kurven (DTA) von Boehmit (Figur 1a), Hydrargyllit (Gibbsit) (Figur 1b) und Goethit (Figur 1c);
Figur 2 zeigt DTA- und TG-Kurven einer gewaschenen Rotschlammprobe aus dem Autoklavenaufschluss. Zwischen 220° C und 280° C wird eine endotherme Reaktion von Restanteilen von Gibbsit und Boehmit dokumentiert, keine Reaktion von Goethit;
Figur 3 zeigt DTA- und TG-Kurven einer gewaschenen Rotschlammprobe aus dem Rohraufschluss. Zwischen 220° C und 280° C wird eine endotherme Reaktion von Gibbsit und Boehmit dokumentiert, keine Reaktion von Geothit;
Figur 4 zeigt DTA- und TG-Kurven des Filterrückstands (ungelöste Anteile) nach saurem Aufschluss einer Rotschlammprobe aus dem Autoklavenaufschluss.
   Endotherme Reaktionen können nicht festgestellt werden. Beim sauren Aufschluss sind also alle endotherm reagierenden Bestandteile herausgelöst worden, auch die Oxide (vgl. Röntgenanalyse);
Figur 5 zeigt DTA- und TG-Kurven des Filterrückstands (ungelöste Anteile) nach saurem Aufschluss einer Rotschlammprobe aus dem Rohraufschluss. Endotherme Reaktionen können nicht festgestellt werden. Beim sauren Aufschluss sind also alle endotherm reagierenden Bestandteile herausgelöst worden, auch die Oxide (vgl. Röntgenanalyse);
Figur 6 zeigt DTA- und TG-Kurven der Ausfällung aus dem Filtrat von Rotschlamm aus dem Autoklavenaufschluss (pH 10,9). Es treten wieder deutliche endotherme Reaktionen zwischen 214° C und ca. 350° C auf. Ursache dafür sind die Gehalte an Gibbsit, Boehmit und Goethit, die durch Ausfällung aus schwefelsaurer Lösung nach Realkalisierung, allerdings amorph, entstanden sind;
Figur 7 zeigt DTA- und TG-Kurven der Ausfällung aus dem Filtrat von Rotschlamm aus dem Rohraufschluss (pH 11,1). Es treten wieder deutlich endotherme Reaktionen zwischen 268° c und 350° C auf. Ursache ist hier vor allem Goethit, da im Rohraufschluss aufgrund der harten Bedingungen (270°C/60 bar) das Aluminium überwiegend herausgelöst wurde. Der Goethit ist bei diesen Bedingungen in Hämatit überführt worden. Nach der Rehydratisierung liegt der Hämatit wieder als endotherm reagierender Goethit vor;
Figur 8 zeigt DTA- und TG-Kurven der Goethit-Referenz Bayoxide E 99 163. Die endothermen Reaktionen treten zwischen 236° C und ca. 350° C auf. Sie sind vergleichbar der endothermen Reaktion aus der Ausfällung von Rohraufschluss-Filtrat aus Rohraufschluss-RS.

### Diskussion

Rotschlämme enthalten je nach Aufschlussverfahren, d. h. Autoklaven- oder Rohraufschluss, noch Reste von Al- sowie Fe-Verbindungen. Die Al-Verbindungen können als Hydroxide (Gibbsit) Oxidhydrate (Boehmit) oder als Oxide (gamma-Al2O3) vorliegen. Fe-Verbindungen liegen beim Autoklavenaufschluss-RS überwiegend als Hämatit, beim Rohraufschluss fast ausschließlich als Hämatit vor.

Nach dem beschriebenen Verfahren, d. h. nach saurem Aufschluss werden nahezu alle Hydroxide/Oxidhydrate und Oxide des Aluminiums wie des Eisens gelöst. Nach erneuter Ausfällung, z. B. im alkalischen Milieu, fallen die Al- und Fe-Verbindungen nahezu vollständig als Hydroxide/Oxidhyrate aus. Der Gehalt an Oxiden verringert sich stark oder verschwindet.

Damit ist dokumentiert, dass durch Rehydratisierung Oxide in Hydroxid/Oxidhydrate, bzw. Oxidhydrate (beim Al) in Hydroxide zurück verwandelt werden. Damit kann der im Ausgangs-RS enthaltene Gehalt an Al- und Fe-Verbindungen nahezu vollständig in endotherm reagierende Substanzen umgewandelt werden. Der RS, unabhängig von seiner Provenienz, d. h. von dem Ausgangsbauxit und von dem jeweilig gewählten Aufschlussverfahren, wird in seiner endothermen Reaktion maximal unter Bezug auf den chemischen Gehalt an Al- und Fe-Verbindungen im Ausgangsrotschlamm gestärkt. So ist es möglich, einen neuen Stoff herzustellen, der hervorragend geeignet ist, als AFM eingesetzt zu werden. Darüber hinaus können mit der erfindungsgemäßen Substanz MR2S allen o. e. Reaktionen und Verfahren durchgeführt werden.

### Ausführungsformen

Offenbart wird daher ein brandgeschütztes Stoffsystem umfassend ein brennbares Material und ein flammhemmendes Mittel dadurch gekennzeichnet, dass das flammhemmende Mittel eine mineralische Zusammensetzung umfasst, die
10-50 Gewichtsprozent Eisenverbindungen,
12 - 35 Gewichtsprozent Alumiumverbindungen,
5 - 17 Gewichtsprozent SiO₂,
2 - 21 Gewichtsprozent TiO₂,
0,5 - 6 Gewichtsprozent CaO und
3 - 10 Gewichtsprozent Na₂O
umfasst.

Offenbart wird, dass im MR2S das Verhältnis von Eisenhydroxid (Goethit) zu Eisenoxid (Hämatit) fast ausschließlich in Richtung Goethit verschoben ist. Offenbart wird, dass im MR2S das Verhältnis von Aluminiumhydroxid (Gibbsit) und Aluminiumoxidhydrat (Boehmit) zu Aluminiumoxid (gamma - Al2O3) stark in Richtung Aluminiumhydroxid/Aluminiumoxidhydrat verschoben ist.

Dabei kann die mineralische Zusammensetzung 10-45, 30-50, oder 40 Gewichtsprozent Fe₂O₃ umfassen.

Dabei kann die mineralische Zusammensetzung 12-30, 20-35, oder 25 Gewichtsprozent Al₂O₃ umfassen.

Dabei kann die mineralische Zusammensetzung 5-17, 10-17, oder 15 Gewichtsprozent SiO₂ umfassen.

Dabei kann die mineralische Zusammensetzung 5-21, 2-15, 5-10, oder 7 Gewichtsprozent TiO₂ umfassen.

Dabei kann die mineralische Zusammensetzung 0,5-6, 0,5-2,5, 0,5-1,5, oder 1 Gewichtsprozent CaO umfassen.

Dabei kann die mineralische Zusammensetzung 5-10, 3-6, 8-10, oder 0,02 Gewichtsprozent Na₂O umfassen.

Dabei kann jeder der oben angegebenen Bereiche kombiniert werden. Insbesondere kann die mineralische Zusammensetzung
40 Gewichtsprozent Eisenverbindungen,
25 Gewichtsprozent Aluminiumverbindungen,
15 Gewichtsprozent SiO₂
7 Gewichtsprozent TiO₂
1 Gewichtsprozent CaO und
0,02 Gewichtsprozent Na₂O umfassen,
wobei das Verhältnis von Hydroxiden und Oxid-Hydraten zu Oxiden bei den Verbindungen des Fe und des Al stark auf der Seite der Hydroxide/Oxidhydrate liegt.

Die mineralische Zusammensetzung kann modifizierter, rehydratisierter RS (MR2S) sein. Der Rotschlamm, aus dem MR2S hergestellt wird, kann aus einer Herstellung von Tonerde oder ATH nach dem Bayerverfahren im Autoklavenaufschluss-, bzw. Rohraufschlussverfahren aus heimischen oder importierten Bauxiten als Rohstoff in den wichtigsten Industrieländern aller Erdteile, insbesondere Deutschland, Australien, Island, China, Indien, USA oder Jamaika stammen.

Das Stoffsystem kann ein Baustoff, ein Kunststoffprodukt, ein Gummiprodukt, eine Spanplatte, oder eine Kabelummantelung sein. Insbesondere kann das Stoffsystem eine Plane, eine Teppichrücken-Beschichtung, ein Bodenbelag, eine Dachbahn, ein Förderband, ein Kabel, ein Profil (aus Kunststoff für Fenster, Türen), ein Rohr, eine Dichtung, eine Spanplatte, Spritzguss, Laminat, eine Leiterplatte, ein Schlauch, Gießharz, Schaum oder andere sein.

Das Stoffsystem kann den Flammhemmer in einem Anteil von 3 - 95 Gewichtsprozent umfassen.

Der Anteil des Flammhemmers im Stoffsystem kann vom jeweils verwendeten brennbaren Material oder dem Stoffsystem abhängen. Dabei ist auf eine möglichst hohe flammhemmende Wirkung bei gleichzeitiger Optimierung der physikalisch technischen Eigenschaften des brennbaren Materials und des erhaltenen Stoffsystems in Hinsicht auf Verarbeitbarkeit, Stabilität und Flexibilität zu achten. Bei AFM mit hoher endothermer Enthalpie kann der Füllgrad verringert werden, so dass insbesondere die physikalischen Eigenschaften des brennbaren Systems weniger verändert werden.

Insbesondere kann das Stoffsystem den Flammhemmer in einem Anteil von 3-90, 3-80, 3-70, 3-60, 3-50, 3-40, 3-30, 3-20, 3-15, 3-10, 3-4 Gewichtsprozent enthalten. Insbesondere kann das Stoffsystem den Flammhemmer in einem Anteil von 10-90, 20-90, 30-90, 40-90, 50-90, 60-90, 70-90, 80-90 Gewichtsprozent enthalten. Ferner kann jede dieser Bereichsgrenzen mit einer anderen Bereichsgrenze kombiniert werden. So kann aus den Bereichen 3-90 und 3-80 Gewichtsprozent der Bereich 80-90 Gewichtsprozent gebildet werden oder aus den Bereichen 5-70 und 30-90 der Bereich 70-90. Ferner kann das Stoffsystem den Flammhemmer in einem Gewichtsprozentanteil von 3-95 umfassen, wobei jeder ..Wert in diesem Bereich als offenbart gilt.

Das flammhemmende Mittel kann die mineralische Zusammensetzung (MR2S) in einem Anteil von 30-100 Gewichtsprozent umfassen und der jeweils verbleibende Anteil von 0-70 Gewichtsprozent kann durch eine weitere flammhemmende Zusammensetzung gebildet werden.

Das flammhemmende Mittel kann die mineralische Zusammensetzung auch in einem Anteil von 40-100, 50-100, 60-100, 70-100, 80-100, 90-100, 30-90, 30-80, 30-70, 30-60, 30-50, oder 30-40 Gewichtsprozent umfassen und der jeweils verbleibende Anteil von 0-70 Gewichtsprozent kann durch eine weitere flammhemmende Zusammensetzung gebildet werden. Diese Bereiche können, wie oben bereits erklärt, kombiniert werden, so das beispielsweise die Bereiche 40-100 und 30-70 Gewichtsprozent zu 40-70 Gewichtsprozent kombiniert werden können. Ferner kann der Flammhemmer die mineralische Zusammensetzung in einem Gewichtsprozentanteil von 30-100 umfassen, wobei jeder Wert in diesem Bereich als offenbart gilt.

Die weitere flammhemmende Zusammensetzung kann eine anorganische nichttoxische endotherm reagierende Substanz umfassen.

Die weitere flammhemmende Zusammensetzung kann insbesondere Salzhydrate, Hydroxide und Karbonate umfassen. Als Hydroxide kommen z. B.

Aluminiumtrihydroxide, Goethit oder Magnesiumdihydroxid, sowohl als synthetisches MDH mit einer spezifischen (BET) Oberfläche von 2 bis 50 m²/g und einem mittleren Teilchendurchmesser (d50) von << 1 *µ*m (sogenanntes Nanomagnesiumhydroxid) als auch natürlicher gemahlenem Brucit, der auch anteilig Hydromagnesit oder Magnesiumhydroxicarbonat in variablen Anteilen enthält oder enthalten kann, mit einer Korngröße( mittlerer Teilchendurchmesser) (d50) von bis zu 50 µm, vorzugsweise von bis zu 10 µm, in Betracht. Als Salzhydrate kommen z. B. Natrium- oder Calciumsilikathydrate, Calciumaluminiumsulfathydrate und andere in Betracht. Als Karbonate kommen z. B. Calciumkarbonat, Calciumbikarbonat, Magnesiumcarbonat und andere in Betracht.

MR2S hat einen Gehalt an löslichem Na₂O von max. 0,03 Gewichtsprozent, vorzugsweise von 0,003 - 0,03 Gewichtsprozent.

MR2S hat eine Korngröße von 0,5 - 50 µm, vorzugsweise von 0,5 - 10 µm. Offenbart wird auch die Verwendung des oben beschriebenen flammhemmenden als Flammhemmer für brennbare Stoffsysteme, brennbare Baustoffe, Kunststoff, Gummi, Spanplattenmaterial, oder Kabelummantelungen.

Offenbart wird auch ein Verfahren zu Herstellung von brandgeschützten Stoffsystemen, umfassend die Schritte:
a. Bereitstellen eines brennbaren Materials,
b. Vermengen oder Beschichten des brennbaren Materials mit dem flammhemmenden, und dadurch
c. Erhalten eines brandgeschützten Stoffsystems.

Die mineralische Zusammensetzung in dem in Schritt b. genannten flammhemmenden Mittel kann feinkörnig sein, und kann vorzugsweise eine mittlere Teilchengröße (d50) von 0,5 - 10 µm, 0,5-9, 0,5-8, 0,5-7, 0,5-6, 0,5-5, 0,5-4, 0,5-3, 0,5-2, 0,5-1, 1-9, 2-9, 3-9,4-9, 5-9, 6-9, 7-9, 8-9 µm aufweisen. Jeglicher Bereich, der aus Kombination der Bereichsgrenzen gebildet werden kann, gilt als offenbart.

Das flammhemmende Mittel kann vor dem Vermengen oder Beschichten des Schrittes b physikalisch behandelt werden, insbesondere gemahlen, werden. Das Mahlen kann dazu dienen das flammhemmende Mittel auf jede beliebige durchschnittliche Korngröße zu verkleinern. Die erreichte Korngröße kann jeden Wert zwischen 0-10 µm annehmen. Sollte MR2S in Korngrößen > 10 µm anfallen, kann für spezielle Anwendungen MR2S mit einer Korngröße > 10 µm ohne Mahlung Anwendung finden.

Weiterhin kann das flammhemmende Mittel durch Beschichtung oder Oberflächenbehandlung mit Substanzen verbessert werden, um die Verträglichkeit des flammhemmenden Mittels mit einem der hier offenbarten brennbaren Mittel, insbesondere einem Polymer oder einer Polymermatrix, zu verbessern.

Zur Beschichtung der Oberfläche des flammhemmenden Mittels können dem allgemeinen Stand der Technik entsprechende übliche Couplingsysteme, insbesondere Silane, Fettsäuren und Weichmacher Verwendung finden. Dies dient primär zur Erleichterung der Verarbeitung/ Einarbeitung insbesondere in polymere Matrizes, seien es elastomere, duromere oder thermoplastische. Zusätzlich lässt sich das Eigenschaftsprofil des erfindungsgemäßen AFM-Systems hinsichtlich der gewünschten Eigenschaftsprofil-Kombinationen gezielt beeinflussen. Es kann das MR2S allein oder seine Kombination mit den erfindungsgemäßen Synergisten wie Nanoclays, After-Glow Suppressants (Zinkborate und Borsäurederivate, Zink-Stannate/-hydroxystannate) und anderen halogenfreie AFM vermengt und anschließend gemeinsam oberflächenmodifiziert werden. Alternativ können auch Gemenge von MR2S mit den Synergisten in Master Batch Form eingesetzt werden.

Durch Oberflächenbeschichtung allein und /oder in Kombination insbesondere mit Nanoclays (Cloisites von SCP Inc, Gonzales, Texas, USA) kann erreicht werden, dass die im Brandfall anfallende Asche in einer polymorphen, glasigen Konsistenz mit erheblicher Rest-Elastizität anfällt.

### Beispiele

Es wurden orientierende Untersuchungen durchgeführt, um den Einfluss von modifiziertem, rehydratisiertem RS auf die Brandeigenschaften und mechanischen Eigenschaften verschiedener Kunststoffe zu ermitteln. Ziel der Versuche war es festzustellen, ob das üblicherweise eingesetzte ATH und MDH teilweise und/oder vollständig durch MR2S ersetzt werden können.

Die Versuche wurden an zwei polaren Kunststoffen (PVC und Ethylenvinylacetat (EVA)) sowie zwei nicht polaren Kunststoffen (PE und PP) jeweils im Vergleich zu reinem ATH, bzw. MDH durchgeführt.

Die Beispiele dienen zur Orientierung und Veranschaulichung, nicht zur Beschränkung, während der Schutzbereich des Patentes ausschließlich durch die Ansprüche definiert wird.

### Beispiel 1 PVC

Als Ausgangsrohstoffe wurden verwendet:
Standard PVC-U für Fensterprofil
Martinal OL 104//LEO (Albemarle, Bergheim) ATH-Komponente als Vergleichssubstanz zu MR2S (Nullprobe).

MR2S als anorganisches Flammschutzmittel (AFM) mit folgender Zusammensetzung:

| | | |
|---|---|---|
| Fe2O3 | 33,12 % | (Verhältnis Hydroxide/Oxide 6, 3 zu 1) |
| Al2O3 | 25,68 % | (Verhältnis Hydroxide/Oxide 4, 2 zu 0,9) |
| Si02 | 11,16 % | |
| TiO2 | 7,55 % | |
| CaO | 3,20 % | |
| Na₂O | 0,03 % | |

Zunächst wurden Dryblends in einem Container Mischer (CM 80, Mixaco) hergestellt. Aus den Dryblends wurden Profile mit einem gegenlaufenden Doppelschneckenextruder vom Typ DS 7.22 der Firma Weber Maschinenfabrik hergestellt. Die Extrusionstemperatur lag zwischen 180° C und 190° C.

Aus den hergestellten Profilen wurden Prüfkörper für Zugversuche (DIN EN ISO 527, Typ 1 B) und Brandtest (DIN 4102, Verfahren B) herausgearbeitet.

### Folgende Rezepturen wurden hergestellt:

PVC-U Rezeptur für Fensterprofile mit 4 % anorganischem Flammschutzmittel

### Zusammensetzung des anorganischen Flammschutzmittels:

| | | |
|---|---|---|
| 100 % ATH | 0 % AFM | (Nullprobe), AFM ist gleich MR2S |
| 80 % ATH | 20 % AFM | (Probe 1) |
| 50 % ATH | 50 % AFM | (Probe 2) |
| 20 % ATH | 80 % AFM | (Probe 3) |
| 0 % ATH | 100 % AFM | (Probe 4) |

### Folgende Prüfungen wurden durchgeführt:

### Zugfestigkeit [MPa] DIN EN ISO 527

44,18 ± 1,37 Nullprobe
46,67 ± 0,28 Probe 1
45,67 ± 0,28 Probe 2
45,40 ± 0,32 Probe 3
48,51 ± 3,16 Probe 4

### Zug-E-Modul [MPa] DIN EN ISO 527

2923 ± 226 Nullprobe
3068 ± 164 Probe 1
2991 ± 97 Probe 2
2983 ± 36 Probe 3
2952 ± 99 Probe 4

### Brandeigenschaften DIN 4102, Verfahren B

Zur Überprüfung des Brandverhaltens wurden die Prüfkörper einer Brandprüfung unterzogen (gemäß DIN 4102, Verfahren B). Bei der Prüfung wurde die Entflammung an der Kante des Prüfkörpers, die Abbrandgeschwindigkeit und das brennende Abfallen und Abtropfen des Baustoffs bewertet.

Bei der Brandprüfung wurde bei allen Rezepturen die obere Messmarke von der Flammspitze der brennenden Probekörper nicht erreicht. Der brennende Probekörper erlischt vorher von selbst. Dementsprechend gehören alle Proben zur Brandklasse K1.

Durch teilweisen oder vollständigen Ersatz von ATH durch AFM bleibt das Brandverhalten nach DIN 4102 Verfahren B unverändert.

### Beispiel 2 EVA

Bei der Herstellung von EVA-Rezepturen wurde als Compoundiermaschine ZSE 27 Mxx eingesetzt. Das Temperaturprofil lag zwischen 145° C und 160° C. Zur Herstellung von Granulaten wurde ein Stranggranulator eingesetzt. Beim Compoundieren wurde festegestellt, dass das AFM deutlich bessere Rieselfähigkeit aufweist im Vergleich zu ATH, was die Einarbeitung und Dispergierung deutlich erleichtert. Aus den EVA-Compounds wurden Prüfkörper für die Schlag-Zugprüfung (DIN EN ISO 8256), Zugprüfung (DIN ISO 527) und die Sauerstoffprüfung (LOI, DIN ISO 4589-2) spritzgegossen.

### Ausgangsmaterial

EVA mit 1,2 % Haftvermittler und 0,4 % Stabilisator
Martinal OL 104/LEO (ATH Komponente)
MR2S als anorganisches Flammschutzmittel (AFM)

### Rezepturen

### EVA mit 60 % Flammschutzmittel

### Zusammensetzung des Flammschutzmittels

| | | |
|---|---|---|
| 100 % ATH | 0 % AFM | Nullprobe |
| 66,7 % ATH | 33,3 % AFM | Probe 1 |
| 50 % ATH | 50 % AFM | Probe 2 |
| 33,3 % ATH | 66,7 % AFM | Probe 3 |

### Folgende Prüfungen wurden durchgeführt:

### Zugfestigkeit [MPa] DIN EN ISO 527

| | |
|---|---|
| 6,16 ± 0,05 | Nullprobe |
| 6,17 ± 0,05 | Probe 1 |
| 6,29 ± 0,05 | Probe 2 |
| 6,42 ± 0,05 | Probe 3 |

### Zug-E-Modul [MPa] DIN EN ISO 527

| | |
|---|---|
| 93 ± 2 | Nullprobe |
| 88 ± 2 | Probe 1 |
| 87 ± 3 | Probe 2 |
| 90 ± 2 | Probe 3 |

### Reißdehnung [ % ] DIN EN ISO 527

| | |
|---|---|
| 120,57 ± 13,83 | Nullprobe |
| 96,30 ± 6,01 | Probe 1 |
| 108,27 ± 8,69 | Probe-2 |
| 117,51 ± 4,92 | Probe 3 |

### Schlagzähigkeit [KJ/m2] DIN EN ISO 8256

| | |
|---|---|
| 139,27 ± 4,83 | Nullprobe |
| 139,78 ± 4,18 | Probe 1 |
| 138,27 ± 5,66 | Probe 2 |
| 149,00 ± 8,33 | Probe 3 |

### Brandeigenschaften

### Sauerstoffindex [ % ] gemäß DIN EN ISO 4589-2

| | |
|---|---|
| 36,3 ± 0,10 | Nullprobe |
| 32,1 ± 0,4 | Probe 1 |
| 30,1 ± 0,7 | Probe 2 |
| 30,0 ± 0,1 | Probe 3 |

### Beispiel 3 PE

Die Rezepturen auf PE-Basis wurden in einem gleichlaufenden Zweischneckenkneter ZSE 18 HPE plastifiziert und homogenisiert. Die Temperaturen im Compounder lagen zwischen 190° C und 220° C. Aus den PE-Compounds wurden Prüfkörper für den Zugversuch (DIN EN ISO 527, Typ 1 B), für den Schlagversuch (DIN EN ISO 179) und für den Brandtest (UL 94) im Spritzgießverfahren hergestellt.

### Ausgangsmaterialien:

PE Magnesia 7287/Brenntag, Magnesiumhydroxid chem. rein (MDH-Komponente, Nullprobe)
MR2S als anorganisches Flammschutzmittel (AFM)

### Rezepturen

### PE mit 50 % Flammschutzmittel

### Zusammensetzung des Flammschutzmittels:

| | | |
|---|---|---|
| 100 % MDH | 0 % AFM | Nullprobe |
| 70 % MDH | 30 % AFM | Probe 1 |
| 50 % MDH | 50 % AFM | Probe 2 |
| 30 % MDH | 70 % AFM | Probe 3 |

### Folgende Prüfungen wurden durchgeführt:

### Zugfestigkeit [MPa] DIN EN ISO 527

| | |
|---|---|
| 25,49 ± 0,28 | Nullprobe |
| 25,41 ± 0,20 | Probe 1 |
| 25,51 ± 0,13 | Probe 2 |
| 25,81 ± 0,14 | Probe 3 |

### Zug-E-Modul [MPa] DIN EN ISO 527

| | |
|---|---|
| 2755 ± 102 | Nullprobe |
| 2457 ± 113 | Probe 1 |
| 2521 ± 60 | Probe 2 |
| 2632 ± 116 | Probe 3 |

### Reißdehnung % 1 DIN EN ISO 527

| | |
|---|---|
| 1,99 ± 0,27 | Nullprobe |
| 1,82 ± 0,16 | Probe 1 |
| 1,87 ± 0,18 | Probe 2 |
| 3,09 ± 0,30 | Probe 3 |

### Charpy-Schlagzähigkeit [KJ/m2] DIN EN ISO 179

| | |
|---|---|
| 6,85 ± 0,85 | Nullprobe |
| 6,28 ± 0,54 | Probe 1 |
| 5,94 ± 0,33 | Probe 2 |
| 7,53 ± 0,34 | Probe 3 |

### Brandeigenschaften [mm/min] UL 94 horizontaler Test

| | |
|---|---|
| 13,8 ± 0,25 | Nullprobe |
| 12,8 ± 0,22 | Probe 1 |
| 13,7 ± 0,33 | Probe 2 |
| 16,3 ± 0,34 | Probe 3 |

### Beispiel 4 PP

Die Rezepturen auf PP-Basis wurden in einem gleichlaufenden Zweischneckenkneter ZSE 18 HPE plastifiziert und homogenisiert. Die Temperaturen im Compounder lagen zwischen 190° C und 220° C. Aus den PP-Compounds wurden Prüfkörper für den Zugversuch (DIN EN ISO 527, Typ 1 B), für den Schlagversuch (DIN EN ISO 179) und für den Brandtest (UL 94) im Spritzgießverfahren hergestellt.

### Ausgangsmaterialien

### PP

Magnesia 7287/Brenntag, Magnesiumhydroxid chemisch rein (MDH-Komponente, Nullprobe)
MR2S als anorganisches Flammschutzmittel (AFM)

### Rezepturen

### PP mit 50 % Flammschutzmittel

### Zusammensetzung des Flammschutzmittels

| | | |
|---|---|---|
| 100 % MDH | 0 % AFM | Nullprobe |
| 70 % MDH | 30 % AFM | Probe 1 |
| 50 % MDH | 50 % AFM | Probe 2 |
| 30 % MDH | 70 % AFM | Probe 3 |

### Folgende Prüfungen wurden durchgeführt:

### Zugfestigkeit [MPa] DIN EN ISO 527

| | |
|---|---|
| 27,29 ± 0,20 | Nullprobe |
| 28,17 ± 0,10 | Probe 1 |
| 28,43 ± 0,10 | Probe 2 |
| 29,38 ± 0,83 | Probe 3 |

### Zug-E-Modul [MPa] DIN EN ISO 527

| | |
|---|---|
| 3893 ± 112 | Nullprobe |
| 3886 ± 109 | Probe 1 |
| 3606 ± 100 | Probe 2 |
| 3695 ± 116 | Probe 3 |

### Reißdehnung, [ % ] DIN EN ISO 527

| | |
|---|---|
| 1,34 ± 0,09 | Nullprobe |
| 1,35 ± 0,09 | Probe 1 |
| 1,47 ± 0,12 | Probe 2 |
| 1,43 ± 0,11 | Probe 3 |

### Charpy-Schlagzähigkeit [KJ/m²] DIN ESO ISO 179

| | |
|---|---|
| 12,77 ± 0,70 | Nullprobe |
| 11,18 ± 0,60 | Probe 1 |
| 11,01 ± 0,84 | Probe 2 |
| 10,92 ± 0,99 | Probe 3 |

### Brandeigenschaften [mm/min] UL 94 horizontaler Test

| | |
|---|---|
| 11,5 ± 0,32 | Nullprobe |
| 12,2 ± 0,29 | Probe 1 |
| 12,7 ± 0,16 | Probe 2 |
| 14,4 ± 0,04 | Probe 3 |

### Diskussion

Alle Rezepturen erfüllen DIN 4102, Verfahren B oder den horizontalen Test nach UL 94 (Anforderung: Brenngeschwindigkeit < 40 mm/min). Die gemessenen Brandgeschwindigkeiten liegen deutlich unter den angeforderten Werten.

Mit den orientierenden Versuchen von PVC-, EVA-, PE- und PP-Compounds ist somit erfindungsgemäß nachgewiesen, dass modifizierter, rehydratisierter RS (MR2S), der in den Versuchen ohne jede Zusatzbehandlung (z. B. Oberflächenbeschichtung mit Vinylsilan) compoundiert wurde, sowohl hinsichtlich seines Brandverhaltens im Vergleich zu ATH und MDH wie hinsichtlich der erzielten mechanischen Eigenschaften im Vergleich zu ATH und MDH vergleichbare Resultate ergibt, also erfolgreich eingesetzt werden kann.

Hinsichtlich der flammhemmenden Wirkung von MR2S ist es nicht wichtig, welchen Beitrag die einzelnen endotherm reagierenden Bestandteile des MR2S wie z. B. Goethit, Gibbsit, Boehmit oder andere in welchen Temperaturintervallen leisten und ob z. B. synergistische Effekte untereinander auftreten. Wichtig allein ist die Tatsache, dass die Summe der Beiträge zur Flammhemmung aller im MR2S enthaltenen endotherm reagierenden Substanzen der flammhemmenden Wirkung von ATH und MDH vergleichbar ist.

Entscheidend für die flammhemmende Wirkung ist der endotherme Effekt der flammhemmenden Substanzen, der durch Abspaltung von Wasser und die Verdampfung von Wasser entsteht. Das Maß ist die endotherme Enthalpie, die in J/g gemessen wird.

Die endotherme Enthalpie kann durch Thermogravimetrie (TG), Differentialthermoanalyse (DTA) und dynamische Differenz-Scanning-Kalorimeter -Messungen (DSC) gemessen werden.

Orientierende Messungen bestätigen, dass RS so wie er im Bayer-Prozeß entsteht, nur geringe endotherme Enthalpie aufweist mit sehr starken Schwankungen. Modifizierter, rehydratisierter RS (MR2S) weist dagegen deutlich höhere endotherme Enthalpie aus mit geringeren Schwankungen, da durch Rehydratisierung die Oxide des Fe und AL in Hydroxide/Oxidhydrate, die allein endotherm reagieren, zurück verwandelt wurden. Aus MR2S lassen sich somit einheitliche, für die jeweiligen Stoffsystem maßgeschneiderte AFM herstellen.

In den orientierenden Versuchen mit MR2S als AFM werden das Brandschutzverhalten sowie die mechanischen Eigenschaften des Stoffsystems mit denen von ATH und MDH als AFM verglichen. Die Ergebnisse zeigen, dass MR2S mit ATH und MDH vergleichbare Ergebnis bringt. Da MR2S zwischen 180° C und 350° C endotherme Enthalpie entfaltet, kann MR2S sowohl ATH wie MDH teilweise oder ganz ersetzen. MR2S ist im Vergleich zu RS, aus dem MR2S durch Modifikation, insbesondere Rehydratisierung, hergestellt wird, chemisch wie mineralogisch und in seinem endothermen Verhalten eine völlig andere Substanz. Im Gegensatz zu RS ist MR2S mit ATH und MDH als AFM vergleichbar. Über Messungen mit Pulverröntgendiffraktometer DTA, TG und DSC kann gezeigt werden, dass die Modifizierung, insbesondere die Rehydratisierung das Verhältnis von Hydroxiden/Oxid-Hydraten zu Oxiden zugunsten von Hydroxiden/Oxid-Hydraten verschoben hat, was gleichzusetzen ist mit höherer endothermer Enthalpie. Von großer Bedeutung ist der Zusammenhang zwischen spezifischer endothermer Enthalpie gemessen in J/g und dem Füllgrand in den jeweiligen Stoffsystemen. Die Endothermie von Gibbsit liegt bei ca. 1000 J/g,von Boehmit bei ca. 500 J/g und bei Goethit bei ca. 260 J/g. Berücksichtigt man jedoch die Dichte von Gibbsit (p=2,4g/cm3), Boehmit (p=2,98 g/cm3) und Goethit (p=4,17 g/cm3) unter Bezug auf das Einsatzvolumen, nähern sich die endotherme Wirkung der 3 wichtigsten endotherm reagierenden Bestandteilen im MR2S an. Goethit liefert dann einen hohen Beitrag.

Füllgrad x spezifischer endothermer Enthalpie ist das "Paket", das die Flammhemmung bewirkt. Je höher die spezifische endotherme Enthalpie ist, umso geringer muß der Füllgrand sein, was sowohl aus ökonomischen Gründen, als auch aus Gründen der mechanischen Eigenschaften des Stoffsystems wichtig ist. Die mechanischen Eigenschaften des Stoffsystems werden umso weniger verändert, je geringer der Füllgrad ist.

Bei der thermischen Zusetzung von MR2S entstehen keine toxischen oder korrosiven Gase.

Die in den Versuchen gemessenen mechanischen Eigenschaften der mit MR2S hergestellten Compounds zeigen ähnliche Resultate im Vergleich zu Compounds, die mit ATH, bzw. MDH produziert worden sind. Oberflächenbehandlungen von flammhemmenden Substanzen, z. B. mit Silanen, Fettsäuren oder Weichmachern unterstützen die Verträglichkeit des Füllstoffs mit der Polymermatrix und verbessern die mechanischen Eigenschaften des Compounds. Die gleichen Oberflächenbehandlungen, die bei ATH und MDH Anwendungen finden, können auch bei MR2S erfolgen und zu optimierten Eigenschaften führen.

Auch die Teilchengröße und Kornverteilung des eingesetzten AFM spielen für die Compoundeigenschaften eine wichtige Rolle. Stand der Technik ist es, dass die bisher im Markt eingesetzten Produkte auf Basis ATH und MDH gezielt hinsichtlich Teilchengröße und Kornverteilung eingestellt werden. Während z. B. ATH durch feinteilige Fällungsreaktionen produziert werden kann, müssen bei MR2S wegen seiner Unlöslichkeit in Wasser zur Mikronisierung Mahlprozesse und Siebungen eingesetzt werden. Günstig ist die Tatsache, dass RS wie MR2S sehr feinteilig anfallen.

Die thermische Stabilität von ATH-Produkten reicht bis zu 225° C, die von MDH-Produkten bis zu 340° C. Insofern werden in der Praxis bei Verarbeitungstemperaturen < 200° C üblicherweise ATH-Produkte eingesetzt, bei Verarbeitungstemperaturen > 200° C üblicherweise MDH-Produkte. Erfindungsgemäß kann MR2S bei Verarbeitungstemperaturen < 200° C und > 200° C eingesetzt werden.

AFM auf Basis von ATH, MDH und erfindungsgemäß MR2S finden insbesondere Anwendungen in Polymeren, aber auch anderen brennbaren Stoffsystemen:

Beispiele für Polymere sind: Acryl Dispersionen, Acrylharze, Elastomere, Epoxidharze, Latex Dispersionen, Melaminharze, PA, PE, PE-Copolymere, PE-Copolymere, thermoplastisch, PE-Copolymere vernetzt, Phenolharze, Polyesterharze (UP), Polyurethan, PP, PVC, PVC Plastisole, TPU, Vinylesterharze, u. andere. Beispiele für Anwendungen sind: Planen, Teppichrücken-Beschichtungen, Bodenbeläge, Dachbahnen, Förderbänder, Kabel, Profile, Rohre, Spanplatten, Spritzguss, Laminate, Leiterplatten, Schläuche, Gießharze, Schäume, und viele andere.

Mit der vorleigenden Erfindung ist es also möglich, aus RS, der beim Bayer-Prozeß nach dem Autoklavenverfahren oder dem Rohraufschlussverfahren anfällt, durch chemische Reaktionen wie z. B. durch Rehydratisierung oder durch andere Modifizierungen einen neuen Stoff, nämlich MR2S herzustellen, der in Stoffsystemen aller Art als halogenfreier, anorganischer, nicht toxischer Flammhemmer eingesetzt werden kann. Aufgrund der hohen Temperaturspanne, in der MR2S reagiert, kann MR2S ATH und/oder MDH teilweise oder ganz ersetzen.

## Patentansprüche

1. Anorganisches, halogenfreies Flammschutzmittel aus modifiziertem, rehydratisiertem Rotschlamm (MR2S) mit einer mineralischen Zusammensetzung von
- 10 bis 50 Gewichtsprozent Eisenverbindungen,
- 12 bis 35 Gewichtsprozent Aluminiumverbindungen,
- 5 bis 17 Gewichtsprozent Siliziumverbindungen,
- 2 bis 21 Gewichtsprozent TiO₂ und
- 0,5 bis 6 Gewichtsprozent Calciumverbindungen,
wobei die Verbindungen des Eisens einen Hydroxid- und Oxidhydratanteil von größer/gleich 50 Gewichtsprozent, vorzugsweise größer/gleich 80 Gewichtsprozent im Verhältnis zum Oxidanteil der Eisenverbindungen aufweisen,
und wobei die Verbindungen des Aluminiums einen Hydroxid- und Oxidhydratanteil von größer/gleich 50 Gewichtsprozent, vorzugsweise größer/gleich 80 Gewichtsprozent im Verhältnis zum Oxidanteil der Aluminiumverbindungen aufweisen.

2. Anorganisches, halogenfreies Flammschutzmittel aus modifiziertem, rehydratisiertem Rotschlamm (MR2S) gemäß Anspruch 1, **dadurch gekennzeichnet, dass** der Anteil an Na₂O löslich gleich kleiner 0,03 Gewichtsprozent beträgt.

3. Anorganisches, halogenfreies Flammschutzmittel aus modifiziertem, rehydratisiertem Rotschlamm (MR2S) gemäß einem der Ansprüche 1 bis 2, **dadurch gekennzeichnet, dass** die mittlere Teilchengröße (d 50) kleiner gleich 50 µm, vorzugsweise 0,5 bis 10 µm beträgt, und

4. Anorganisches, halogenfreies Flammschutzmittel aus modifiziertem, rehydratisiertem Rotschlamm (MR2S) gemäß einem der Ansprüche 1 bis 3, **dadurch gekennzeichnet, dass** die Restfeuchte kleiner/gleich 0,4 Gewichtsprozent aufweist.

5. Anorganisches, halogenfreies Flammschutzmittel aus modifiziertem, rehydratisiertem Rotschlamm (MR2S) gemäß einem der Ansprüche 1 bis 4, wobei die Oberfläche des modifizierten, rehydratisierten Rotschlamms (MR2S) mit zumindest einer Substanz behandelt ist, welche die Verträglichkeit des modifizierten, rehydratisierten Rotschlamms (MR2S) mit einer Polymermatrix verbessert, wobei die Substanz insbesondere Silane, Fettsäurederivate, Weichmacher, Borsäure und deren Metallsalz, Zinkstannate, Zinkhydroxidstannate oder deren Kombination beinhaltet.

6. Anorganisches, halogenfreies Flammschutzmittel aus modifiziertem, rehydratisiertem Rotschlamm (MR2S) gemäß einem der Ansprüche 1 bis 5, **dadurch gekennzeichnet, dass** die Oberfläche des anorganischen Flammschutzmittels mit Substanzen wie Nanoclays beschichtet ist, um die Verglasung der Asche zu verbessern, die bereits auch durch clayartige Bestandteile im MR2S erfolgt.

7. Anorganisches, halogenfreies Flammschutzmittel aus modifiziertem, rehydratisiertem Rotschlamm (MR2S) gemäß einem der Ansprüche 1 bis 6, wobei dem Flammschutzmittel ein weiterer flammhemmender Zusatz in einem Anteil von 0 bis 70 Gewichtsprozent beigemischt ist, wobei der weitere flammhemmende Zusatz insbesondere eine endotherm reagierende Substanz ist, wobei die endotherm reagierende Substanz insbesondere ATH, Gibbsit, Boehmit, MDH, Goethit oder eine Mischung derselben ist.

8. Brandgeschütztes Stoffsystem umfassend eine brennbares Material und ein Flammschutzmittel gemäß einem der Ansprüche 1 bis 7.

9. Stoffsystem gemäß Anspruch 8 **dadurch gekennzeichnet, dass** das Stoffsystems ein Baustoff, ein Kunststoffprodukt, ein Gummiprodukt, eine Spanplatte oder eine Kabelummantelung ist.

10. Stoffsystem gemäß einem der Ansprüche 8 bis 9 **dadurch gekennzeichnet, dass** das Stoffsystem den Flammhemmer in einem Anteil von 3-95 Gewichtsprozent umfasst.

11. Stoffsystem gemäß einem der Ansprüche 8 bis 10 **dadurch gekennzeichnet, dass** das Flammschutzmittel die mineralische Zusammensetzung in einem Anteil von 30-100 Gewichtsprozent umfasst und der jeweils verbleibende Anteil von 0-70 Gewichtsprozent durch eine weitere flammhemmende Zusammensetzung gebildet wird, wobei die weitere flammhemmende Zusammensetzung insbesondere eine anorganische nichttoxische endotherm reagierende Substanz umfasst und/oder die weitere flammhemmende Zusammensetzung insbesondere Salzhydrate, Hydroxide und Karbonate umfasst.

12. Verwendung des Flammschutzmittels gemäß einem der Ansprüche 1 bis 7 als Flammhemmer für brennbare Stoffsysteme, brennbare Baustoffe, Kunststoffe, Gummi, Spanplattenmaterial oder Kabelummantelungen.

13. Verfahren zu Herstellung von brandgeschützten Stoffsystemen, umfassend die Schritte:
a. Bereitstellen eines brennbaren Materials,
b. Vermengen oder Beschichten des brennbaren Materials mit dem Flammschutzmittel der obigen Ansprüche, und dadurch
c. Erhalten eines brandgeschützten Stoffsystems.

14. Verfahren gemäß Anspruch 13 **dadurch gekennzeichnet, dass** das Flammschutzmittel vor dem Vermengen oder Beschichten des Schrittes b physikalisch behandelt, insbesondere gemahlen wird, vorzugsweise zusammen mit den erfindungsgemäß genannten Synergisten wie Nanoclays, Borsäurederivaten, Zinkstannat / Zinkhydroxidstannate, wobei die Synergisten bei Verwendung mit dem erfindungsgemäßen Flammschutzmittelsystem in elastomeren und thermoplastischen Systemen insbesondere in Form von Master Batchen (Konzentraten) in Granulatform bei der Verarbeitung zugegeben werden.

15. Verfahren nach einem der Ansprüche 13 bis 14, **dadurch gekennzeichnet, dass** das in Schritt b genannte Flammschutzmittel einer Oberflächenbeschichtung mit Substanzen unterzogen, wird, die ein Nachglimmen verhindern, und/oder dass zur Beschichtung der Oberfläche des Flammschutzmittels zur Optimierung und Steuerung von Flammschutz und Verarbeitungscharakteristik sogenannte Beschichtungsmittel wie insbesondere Silane, Fettsäurederivate, Kombinationen hiervon und Weichmachern, aber auch Nanoclays, Borsäure und deren Metallsalz, Zinkstannate, Zinkhydroxidstannate und deren Kombination Verwendung finden.

## Claims

1. Inorganic, halogen-free flameproofing agent comprising modified, rehydrated red mud (MR2S) with a mineral composition of
- 10 to 50 % by weight of iron compounds,
- 12 to 35 % by weight of aluminium compounds,
- 5 to 17 % by weight of silicon compounds,
- 2 to 21 % by weight of TiO₂,
- 0.5 to 6 % by weight of calcium compounds,
wherein compounds of iron have a hydroxide and oxide hydoxide fraction of greater than/equal to 50 % by weight, preferably greater than/equal to 80 % by weight in relation to the oxide fraction of the iron compounds, and wherein the compounds of aluminium have a hydroxide and oxide hydroxide fraction of greater than/equal to 50 % by weight, preferably greater than/equal to 80 % by weight in relation to the oxide fraction of the aluminium compounds.

2. Inorganic, halogen-free flameproofing agent comprising modified rehydrated red mud (MR2S) as claimed in Claim 1, **characterised in that** the proportion of soluble Na₂O is equal to or less than 0.03 % by weight.

3. Inorganic, halogen-free flameproofing agent comprising modified rehydrated red mud (MR2S) as claimed in any one of Claims 1 to 2, **characterised in that** the mean particle size (d 50) is less than or equal to 50 µm, preferably 0.5 to 10 µm.

4. Inorganic, halogen-free flameproofing agent comprising modified rehydrated red mud (MR2S) as claimed in any one of Claims 1 to 3, **characterised in that** the residual moisture is less than or equal to 0.4 % by weight.

5. Inorganic, halogen-free flameproofing agent comprising modified, rehydrated red mud (MR2S) as claimed in any one of Claims 1 to 4, wherein the surface of the modified rehydrated red mud (MR2S) is treated with at least one substance which improves the compatibility of the modified rehydrated red mud (MR2S) with a polymer matrix, wherein the substance contains in particular silanes, fatty acid derivatives, softeners, boric acid and the metal salt thereof, zinc stannates, zinc hydroxide stannates or a combination thereof.

6. Inorganic, halogen-free flameproofing agent comprising modified rehydrated red mud (MR2S) as claimed in any one of Claims 1 to 5, **characterised in that** the surface of the inorganic flameproofing agent is coated with substances such as nanoclays, in order to improve the vitrification of the ash which already takes place due to clay-like constituents in the MR2S.

7. Inorganic, halogen-free flameproofing agent comprising modified rehydrated red mud (MR2S) as claimed in any one of Claims 1 to 6, wherein a further flame-retardant additive is admixed in a proportion of 0 to 70 % by weight with the flameproofing agent, wherein the further flame retardant additive is an endothermally reacting substance, wherein the endothermally reacting substance is in particular ATH, gibbsite, boehmite, MDH, goethite or a mixture thereof.

8. Fireproofed material system comprising a combustible material and a flameproofing agent as claimed in any one of Claims 1 to 7.

9. Material system as claimed in Claim 8, **characterised in that** the material system is a building material, a plastic product, a rubber product, a chipboard, or a cable sheathing.

10. Material system as claimed in any one of Claims 8 to 9, **characterised in that** the material system comprises the flame retardant in a proportion of 3-95 % by weight.

11. Material system as claimed in any one of Claims 8 to 10, **characterised in that** the flame-retardant agent comprises the mineral composition (MR2S) in a proportion of 30-100 % by weight and the respective remaining proportion of 0-70 % by weight is formed by a further flame-retardant composition, wherein the further flame retardant additive comprises an endothermally reacting substance and/or the further flame-retardant composition comprises in particular salt hydrates, hydroxides and carbonates.

12. Use of the flame-retardant material as claimed in any one of Claims 1 to 7 as flame retardant for combustible material systems, combustible building materials, plastics, rubber, chipboard material or cable sheathings.

13. Process for production of fireproofed material systems, comprising the steps:
a. providing a combustible material,
b. blending or coating the combustible material with the flame-retardant material of the above claims, and thereby
c. obtaining a fireproofed material system.

14. Process as claimed in Claim 13, **characterised in that** before the blending or coating of step b the flameproofing agent is physically treated, in particular ground, preferably together with the synergists mentioned according to the invention such as nanoclays, boric acid derivatives, zinc stannate/zinc hydroxide stannates, wherein when used with the flameproofing agent system according to the invention in elastomeric and thermoplastic systems in particular in the form of master batches (concentrates) the synergists are added in granule form during the processing.

15. Process as claimed in any one of Claims 13 to 14, **characterised in that** the flameproofing agent mentioned in step b is subjected to a surface coating with substances which prevent an after-glow, and/or that for coating the surface of the flameproofing agent in order to optimise and control flameproofing and processing characteristics of so-called coating agents such as in particular silanes, fatty acid derivatives, combinations thereof and softeners, but also nanoclays, boric acid and the metal salt thereof, zinc stannates, zinc hydroxide stannates and a combination thereof are used.

## Revendications

1. Agent ignifuge inorganique sans halogène, à base de boue rouge modifiée réhydratée (MR2S) présentant une composition minérale de
- 10 à 50% en poids de composés de fer,
- 12 à 35% en poids de composés d'aluminium,
- 5 à 17% en poids de composés de silicium,
- 2 à 21 % en poids de composés de TiO₂ et
- 0,5 à 6% en poids de composés de calcium,
les composés de fer présentant une proportion d'hydroxyde et d'hydrate d'oxyde supérieure ou égale à 50% en poids, de préférence supérieure ou égale à 80% en poids par rapport à la proportion d'oxyde des composés de fer,
et les composés d'aluminium présentant une proportion d'hydroxyde et d'hydrate d'oxyde supérieure ou égale à 50% en poids, de préférence supérieure ou égale à 80% en poids par rapport à la proportion d'oxyde des composés d'aluminium.

2. Agent ignifuge inorganique sans halogène, à base de boue rouge modifiée réhydratée (MR2S) selon la Revendication 1 **caractérisé en ce que** la proportion de Na₂O soluble est égale ou inférieure à 0,03% en poids.

3. Agent ignifuge inorganique sans halogène, à base de boue rouge modifiée réhydratée (MR2S) selon l'une quelconque des Revendications 1 à 2 **caractérisé en ce que** la taille moyenne des particules (d 50) est inférieure ou égale à 50 µm, de préférence entre 0,5 et 10µm.

4. Agent ignifuge inorganique sans halogène, à base de boue rouge modifiée réhydratée (MR2S) selon l'une quelconque des Revendications 1 à 3 **caractérisé en ce que** l'humidité résiduelle est inférieure / égale à 0,4% en poids.

5. Agent ignifuge inorganique sans halogène, à base de boue rouge modifiée réhydratée (MR2S) selon l'une quelconque des Revendications 1 à 4 **caractérisé en ce que** la surface de boue rouge modifiée réhydratée (MR2S) est traitée avec au moins une substance qui améliore la compatibilité de la boue rouge modifiée réhydratée (MR2S) avec une matrice polymère, ladite substance comportant en particulier des silanes, des dérivés d'acides gras, des plastifiants, des acides boriques et leurs sels métalliques, des stannates de zinc, des stannates d'hydroxyde de zinc ou leur combinaison.

6. Agent ignifuge inorganique sans halogène, à base de boue rouge modifiée réhydratée (MR2S) selon l'une quelconque des Revendications 1 à 5, **caractérisé en ce que** la surface de l'agent ignifuge inorganique est dotée de substances comme des nano-argiles afin d'améliorer la vitrification des cendres, qui est par ailleurs déjà assurée par des composants argileux de la MR2S.

7. Agent ignifuge inorganique sans halogène, à base de boue rouge modifiée réhydratée (MR2S) selon l'une quelconque des Revendications 1 à 6, ledit agent ignifuge étant mélangé à un additif ignifuge supplémentaire dans une proportion de 0 à 70% en poids, ledit additif ignifuge supplémentaire étant essentiellement une substance réagissant de manière endothermique, ladite substance réagissant de manière endothermique étant de l'ATH, de la gibbsite, de la boehmite, de l'MDH, de la goethite ou un mélange de ces dernières.

8. Système de matériaux ignifugé comprenant un matériau combustible et un agent ignifuge selon l'une quelconque des Revendications 1 à 7.

9. Système de matériaux selon la Revendication 8 **caractérisé en ce que** le système de matériau est un matériau de construction, un produit en matériau plastique, un produit en caoutchouc, un panneau de particules ou une gaine de câble.

10. Système de matériaux selon l'une quelconque des Revendications 8 à 9 **caractérisé en ce que** le système de matériau comprend l'agent ignifuge dans une proportion de 3-95% en poids.

11. Système de matériaux selon l'une quelconque des Revendications 8 à 10 **caractérisé en ce que** l'agent ignifuge comprend la composition minérale dans une proportion de 30-100% en poids et que la proportion restante de 0-70% se compose d'un autre composé ignifuge, ledit autre composé ignifuge comprenant essentiellement une substance inorganique non-toxique réagissant de manière endothermique et/ou ledit autre composé ignifuge comprenant essentiellement des hydrates de sel, des hydroxydes et des carbonates.

12. Utilisation de l'agent ignifuge selon l'une quelconque des Revendications 1 à 7 comme agent ignifuge pour des systèmes de matériaux inflammables, des matériaux de construction inflammables, des matériaux plastiques, du caoutchouc, des panneaux de particules ou des gaines de câbles.

13. Procédé pour la fabrication de systèmes de matériaux ignifugés comprenant les étapes de :
a. mise à disposition de matériaux inflammables,
b. mélange ou application de l'agent ignifuge selon les Revendications ci-dessus avec / sur le matériau inflammable, et ainsi
c. obtention d'un système de matériaux ignifugé.

14. Procédé selon la Revendication 13 **caractérisé en ce qu'**avant le mélange ou d'application décrit à l'étape b. l'agent ignifuge est traité physiquement, essentiellement moulu, de préférence avec les synergistes mentionnés conformes à l'invention comme des nano-argiles, des dérivés d'acide borique, des stannates de zinc / stannates d'hydroxyde de zinc, lesdits synergistes, lorsqu'ils sont utilisés avec le système d'agent ignifuge conforme à l'invention, étant ajoutés lors du traitement aux systèmes élastomères et thermoplastiques en particulier sous forme de mélange-maître (concentrés) sous forme de granulés.

15. Procédé selon l'une quelconque des Revendications 13 à 14 **caractérisé en ce que** l'agent ignifuge décrit à l'étape b. est soumis à un traitement de surface au moyen de substances qui empêchent la combustion lente et/ou **en ce que** des agents de revêtement comme en particulier des silanes, des dérivés d'acides gras, des combinaisons de ces derniers et des plastifiants, mais aussi des nano-argiles, des acides boriques et leurs sels de métal, des stannates de zinc, des stannates d'hydroxyde de zinc ou leur combinaison sont utilisés pour enduire la surface de l'agent ignifuge à des fins d'optimisation et de gestion de la protection ignifuge et de la caractéristique de transformation.
